(19) Europäisches Patentamt
European Patent Office
Office européen des brevets

(11) **EP 2 911 070 B1**

(12) **EUROPEAN PATENT SPECIFICATION**

(45) Date of publication and mention
of the grant of the patent:
**19.10.2016 Bulletin 2016/42**

(51) Int Cl.:
***G06F 17/30*** *(2006.01)*

(21) Application number: **14290040.6**

(22) Date of filing: **19.02.2014**

(54) **Long-term validity of pre-computed request results**

Langfristige Gültigkeit von vorberechneter Anfrageergebnisse

Validité à long terme de résultats de demande précalculés

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.08.2015 Bulletin 2015/35**

(60) Divisional application:
**14003986.8 / 2 913 764**

(73) Proprietor: **Amadeus S.A.S.
06410 Biot (FR)**

(72) Inventors:
• **Legrand, Guillaume
Waltham, MA 02453 (US)**
• **Clabrini, Damien
06370 Mouans-Sartoux (FR)**

(74) Representative: **Samson & Partner Patentanwälte mbB
Widenmayerstraße 6
80538 München (DE)**

(56) References cited:
**WO-A1-99/22315        US-A1- 2005 234 971
US-A1- 2009 204 753**

• **JUNGHOO CHO ET AL: "Synchronizing a database to improve freshness", PROCEEDING SIGMOD '00 PROCEEDINGS OF THE 2000 ACM SIGMOD INTERNATIONAL CONFERENCE ON MANAGEMENT OF DATA, vol. 29, no. 2, 1 June 2000 (2000-06-01), pages 117-128, XP002449369, Dallas, TX USA**
• **CARNEY D ET AL: "Scalable application-aware data freshening", PROCEEDINGS 19TH. INTERNATIONAL CONFERENCE ON DATA ENGINEERING. (ICDE'2003)., 5 March 2003 (2003-03-05), pages 481-492, XP010678762, BANGALORE, INDIA DOI: 10.1109/ICDE.2003.1260815 ISBN: 978-0-7803-7665-6**
• **SUNDARESAN R ET AL: "Slacker coherence protocol for pull-based monitoring of on-line data sources", CLUSTER COMPUTING AND THE GRID, 2003. PROCEEDINGS. CCGRID 2003. 3RD IE EE/ACM INTERNATIONAL SYMPOSIUM ON, 12 May 2003 (2003-05-12), pages 250-257, XP010639759, ISBN: 978-0-7695-1919-7**
• **LEHNER W ET AL: "FAST refresh using mass query optimization", PROCEEDINGS 17TH. INTERNATIONAL CONFERENCE ON DATA ENGINEERING. (ICDE'2001)., 2 April 2001 (2001-04-02), pages 391-398, XP010538085, HEIDELBERG, GERMANY DOI: 10.1109/ICDE.2001.914852 ISBN: 978-0-7695-1001-9**
• **NGUYEN HOANG VU ET AL: "On Scheduling Data Loading and View Maintenance in Soft Real-time Data Warehouses", 15TH INTERNATIONAL CONFERENCE ON MANAGEMENT OF DATA COMAD 2009,, 12 December 2009 (2009-12-12), XP055115405, Mysore, India**

**Description**

FIELD OF THE INVENTION

The present invention generally relates to database technology. More specifically, it is directed to a strategy for keeping pre-computed search results stored as database records in a database up-to-date.

BACKGROUND

A common problem in database technology is to ensure short response times to database queries which require processing large volumes of data. For example, such computing-power consuming processing has to be performed in response to so-called "open queries" which contain only little input information (e.g. only one or two parameters out of a dozen possible parameters are specified and/or the specified value ranges of the parameters are broad) and, consequently, lead to a large number of results in general. Possibilities to speed up data processing by increasing hardware performance are limited. Thus, attention is drawn to improving the mechanisms underlying the processing of large data volumes.

One general approach to shorten query times is to pre-compute expected queries and to maintain the corresponding query results in a cache system. Queries are then actually not processed on the large data basis, but are directed to the cache system.

Another issue, however, which comes along with such caching approaches, is to keep the pre-computed search results up-to-date in order to ensure that queries responded by the cached results correctly reflect the status of the corresponding large data basis. In case the underlying data changes, the cached query results get outdated and the cache system would return incorrect results. Thus, update strategies are employed to keep the cache system up-to-date.

Various relatively simple update strategies are known in the prior art like, for example, re-computing the entire data domain frequently, establishing and maintaining re-computation schedules manually and re-computing data when they are getting too old.

Somewhat more sophisticated update strategies have been developed, as e.g. described by WO 01/33472 and WO 02/25557.

WO 01/33472 concerns an availability system used in a travel planning system. The system includes a cache having entries of availability information regarding airline seats. A cache manager manages entry information in the cache in order to keep information in the cache correct, current, complete or otherwise as useful as possible. In response to a query directed to the cache, the cache manager determines if a stored answer is stale and, if this is the case, sends an availability query to a source of availability information. Cache entries to be modified are obtained by asynchronous notifications from external systems and determined by a deterministic, predictive or statistical model.

Similarly, WO 02/25557 pertains to an information retrieval system wherein information received from information sources is cached for future use, such as for future client requests. Proactive queries can be generated to populate a cache and/or to update presently cached information. In an airline information system, proactive queries are ordered on the basis of statistics or predictive indications such a nearness of departure time, the age of cached data, remaining seats in an aircraft, holidays or special events or equipment type. In addition, updates are received by external notifications from airlines such as AVS messages.

Moreover, WO 99/22315 describes a mechanism for automatically refreshing documents in a cache by using a statistics-based probabilistic model. For each document, the cache determines a probability $Psi(t)$ that a cached object i is stale at a particular time t (i.e. the server has changed that object) and a probability $Pri(h)$ that object i is requested by a user by request time h. The cache refreshes those objects with the highest product $Pi = Psi(t) \times Pri(h)$, i.e. the probability that an outdated object is returned to the user with the next request. To maintain these probability values, the cache maintains and tracks historical statistics for the cached objects such as an estimated mean interval between server updates EUI. EUI of an object is e.g. updated when the object itself is updated by the server or the object is not updated after its estimated mean refresh time has elapsed.

SUMMARY OF THE INVENTION

The present invention is defined by the independent claims.

US2009/0204753 A1 relates to refreshing a cache based on query responses provided by a searching system in response to queries. A cache entry is provided for each unique query if space is available in the cache. A temperature value is assigned to each cache entry based on a frequency of occurrence of the corresponding query. An age value is assigned to each cache entry based on a time of last refresh or creation of the corresponding query response. The age of the cache entries is periodically updated and the temperature of a cache entry is updated when a corresponding query occurs. If system resources are available, the query response of a cache entry is refreshed based on the temperature and age of the cache entry. If resources are not available, the refreshing is limited.

The article "Synchronizing a database to Improve Freshness" by J. Cho et al. studies possibilities to refresh a local copy of an autonomous data source to maintain the copy up-to-date. Inter alia, the Poisson process is described as an approach to model the probabilistic evolution of an element.

According to one aspect, the present invention provides a method of re-computing pre-computed search results performed in a database environment. The database environment is at least composed of at least one search platform maintaining pre-computed search results, a re-computation controller and a computation platform.

- The re-computation controller assigns a re-computation indicator to any of the pre-computed search results. The re-computation indicator for a pre-computed search result i indicates a re-computation priority of the pre-computed search result i and is based on at least the following factors:

  ○ a probability that the pre-computed search result i is still valid;
  ○ a re-computation frequency of the search result i approximated by the reciprocal of a time since the last re-computation of the pre-computed search result i; and
  ○ a measure for computation resources $c_i$ needed to re-compute the pre-computed search result i.

- The re-computation indicator is defined by $\dfrac{1 - acc_i}{f_i c_i}$.

- The computation platform re-computes pre-computed search results having a re-computation indicator indicating the highest priority for re-computation. The number of pre-computed search results re-computed by the computation platform is limited by the computation platform's computation resources available for the re-computation within the given time interval.

According to a further aspect, a re-computation controller is provided for employment in a database environment, the database environment comprising a search platform maintaining pre-computed search results and a computation platform. The re-computation controller is arranged to:

- assign a re-computation indicator to any of the pre-computed search results, wherein the re-computation indicator for a pre-computed search result i is based on at least the following factors:

  ○ a probability that the pre-computed search result i is still valid; and
  ○ a re-computation frequency of the search result i approximated by the reciprocal of a time since the last re-computation of the pre-computed search result i; and
  ○ a measure for computation resources $c_i$ needed to re-compute the pre-computed search result i;

  and the re-computation indicator is defined by $\dfrac{1 - acc_i}{f_i c_i}$;

- generate re-computation orders for pre-computed search results having a re-computation indicator indicating the highest need for re-computation, the number of pre-computed search results re-computed by the computation platform being limited by the computation platform's computation resources available for the re-computation;
- transmit the re-computation orders to the computation platform in order to make the computation platform re-compute the pre-computed search results indicated by the re-computation orders.

According to a still further aspect, a non-transitory computer readable storage medium is provided which as computer program instructions stored therein, which when executed on a computer system cause the computer system to perform these activities.

According to another aspect, the computation resources to re-compute pre-computed search result i depend on whether or not other pre-computed search results related to the pre-computed search result i are re-computed during the given time interval and wherein the computation resources needed to re-compute pre-computed search result i are dynamically estimated depending on which other pre-computed search results related to the pre-computed search result i are selected for re-computation during the given time interval.

According to a further aspect, the pre-computed search results for re-computation by the computation platform within the given time interval are iteratively selected. This iterative selection includes an estimating of the re-computation resources to re-compute the pre-computed search results which in turn comprises:

a) initializing the computation resources $c_i$ needed to re-compute each pre-computed search result i with a value assuming computation of i independent from the computation of other pre-computed search results selected for re-computation during the given time interval;

b) selecting a not-yet-selected portion of the pre-computed search results for re-computation in accordance with the re-computation indicator, wherein - based on the current values for the computation resources needed to re-compute the portion of pre-computed search results - the selected portion only requiring a given percentage of the computation platform's overall computation resources available for re-computation within the given time interval;

c) re-assessing the computation resources $c_i$ needed to re-compute each pre-computed search result i by taking into account which pre-computed search results related to the pre-computed search result i have been selected for re-computation;

d) proceeding with step b) if less than 100% of the computation platform's overall computation resources available for re-computation within the given time interval is exhausted.

Further aspects are defined by the dependent claims.

BRIEF DESCRIPTION OF THE FIGURES

The present invention will be described with reference to the accompanying figures. Similar reference numbers generally indicate identical or functionally similar elements.

Figure 1 schematically shows a distributed database environment.

Figure 2 illustrates a probabilistic model predicting decreasing accuracy of a pre-computed search result over time.

Figures 3a, 3b and 3c visualize the effects of a re-computation strategy focusing on re-computing volatile pre-computed search results.

Figures 4a and 4b visualize the effects of a re-computation strategy taking into account re-computation frequencies, re-computation costs for re-computing pre-computed search results and their search popularity.

Figure 5 depicts re-computation costs for different types of pre-computed search result sets.

Figure 6 shows an example of a database environment implementing the methods presented herein.

Figure 7 presents a view on an exemplary inner structure of the re-computation controller.

Figure 8 is an exemplary schematic view of the internal architecture of the query processing server.

DETAILED DESCRIPTION

In order to be able to handle database queries or batch computation requests which require computations on the basis of large volumes of underlying data, search results corresponding to expected queries are generally pre-computed and stored as database records in a database. This database is queried by requesting entities (such as clients, applications, browsers installed on user terminals, etc.) in the course of a search and pre-computed search results fulfilling search criteria indicated by the query are returned to the client in response to the query. Subsequently, the term "query" is used as a general term including any type of information retrieval requests such as transactional queries, requests for batch computations and other forms.

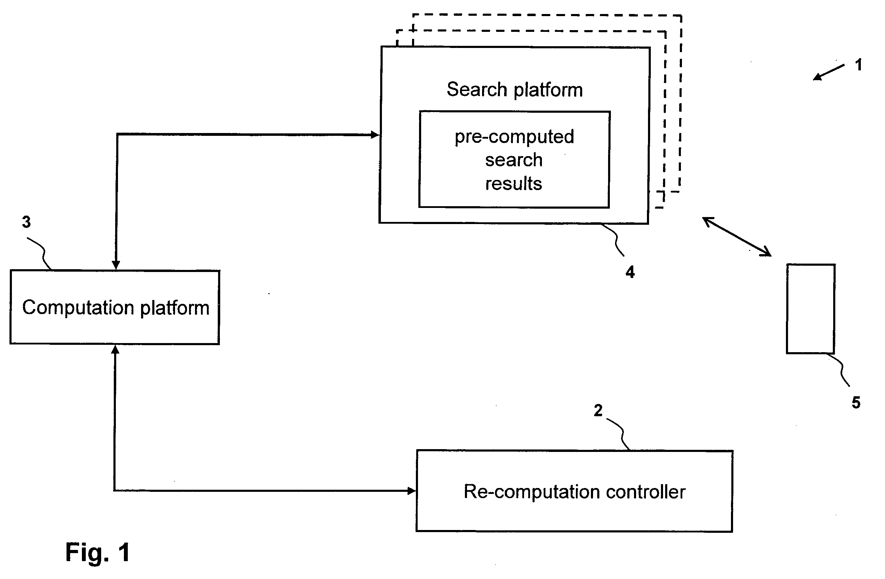

Figure 1 illustrates such a database environment 1 on an abstract level. Basic data, hereinafter also referred to as "calculation data", is kept in and/or accessed by a computation platform 3 which is connected to a re-computation controller 2. The latter one issues re-computation orders to the computation platform 3 which, in turn, transmits the corresponding results to the search platform 4 and, in addition, to the re-computation controller 2 which also maintains the pre-computed search results for reasons of re-computation control. End users 5 such as applications on user terminals access the pre-computed search results from the search platform 4. As indicated by Figure 1, one or several search platforms 4 may be present in environment 1. If a plurality of search platforms 4 is present, the pre-computed search results may be maintained in a distributed manner over the several search platforms 4 and re-computation controller 2 may control the re-computation of all pre-computed search results distributed over search platforms 4. The search platform 4 may also offer a heterogeneous set of pre-computed search requests, e.g. some search platforms 4 maintain pre-computed search requests relating to air travel, other search platforms 4 stored pre-computed search request related to insurances and other search platforms 4 keep pre-computed (or pre-crawled) search requests related to Internet websites. Such a heterogeneous environment may be controlled by one single re-computation controller 2 or by a plurality of re-computation controllers 2. Alternatively, the plurality of search platforms 4 may be utilized to mirror the same pre-computed search results, for example, for reasons of redundancy.

The approach of pre-computing search results and storing them in the search platform accessible to querying clients leads to the general situation that the calculation data may change over time and, thus, the pre-computed search results get outdated or invalid (both terms are used synonymously herein). Pre-computed search results which are still up-to-date, i.e. which match the corresponding real-time computation equivalents (results which would be actually computed on demand without having pre-computed search results available), are called "accurate" pre-computed search results hereinafter. Thus, when the search platform keeping the pre-computed search results correctly represents the current state of the data domain underlying the cached query results, i.e. the calculation data, the pre-computed search results stored in the search platform are - in general - accurate.

Generally, to enable the search platform to return correct results, one wants to maintain a high degree of correlation between pre-computed search results which are provided to the querying entity in response to database queries and their real-time computation equivalents. At the same time, however, it is desirable to minimize computation resource consumption caused by re-computations, i.e. to avoid any unnecessary re-computations such as re-computation of still accurate cached query results. Computing resources are limited and, generally, there are not enough computing resources to re-compute all pre-computed search results at all times. Thus, a trade-off between pre-computed search results accuracy and utilization of the available computing power is to be found.

In order to render re-computation more efficient, metrics are defined to evaluate how "necessary" or "unnecessary" a re-computation is. For instance, it is not worth reshooting an entire massive pre-computation every day if less than half of the computed query results turn out to be outdated. On the other hand, if particular classes of query results are known to change frequently, re-computing them several times per day might be beneficial for the accuracy. Consequently, an effective way of assessing or estimating search result accuracy is needed, generally taking into account both the associated gain on accuracy and the cost of re-computation.

According to the search results update strategy presented herein, re-computations of pre-computed search results are decided based on a predictive model which yields estimations of the accuracy of the pre-computed search results kept in the search platform. This predictive model models the discrepancies between the pre-computed search results and presumed actual search results, i.e. it approximates the accuracy or inaccuracy of any pre-computed search result. The model models, for example, the probable validity of the pre-computed search results over time. Presumptions on the pre-computed results' validity are concluded and extrapolated from past real-world experiences on the subject-matter of the respective data domain.

For example, the underlying calculation data may belong to the domain of air travel and contain information on flights such as departure and destination airport, airline, departure and return dates, fares, booking classes and the like. This air-travel related data is kept in the computation platform and is queried by customers in order to get knowledge of e.g. availability and prices of air flights or any other priced travel products/services. Computing e.g. prices on the basis of the basic flight data is resource- and time-consuming. Hence, the actual prices are pre-computed and stored in the search platform. In this example, the probabilistic model models the validity of the travel recommendation prices over time. The required knowledge to build such a model can be taken from real-world experiences on the behavior and development of e.g. travel recommendation prices prior to the departure date. For example, it might be known that prices remain relatively stable over the time period prior to one month before the respective departure dates, but get more volatile during the month before the departure date. Hence, the probabilistic model indicates that pre-computed prices belonging to travel recommendations upcoming in the next month should be re-computed more often than such pre-computed prices which are associated with recommendations in the more distant future.

A particular strategy for re-computing pre-computed search results based on a predictive model is, for example, proposed by the unpublished International patent application PCT/EP2013/002390 which is included by reference herein. In particular, approaches disclosed therein take into account the so-called "volatility" and "popularity" of the pre-computed search results. Note that this "volatility" does not refer to a change of the pre-computed search results themselves, but to change of the underlying data forming the basis for calculation of the pre-computed search results, potentially resulting in outdated or invalid pre-computed search results. "Popularity" relates to the frequency of queries to the pre-computed search results in the database: pre-computed search results queried more often than others are more popular than these other more non-popular pre-computed search results.

The present inventors have recognized that concentrating the re-computation strategy solely on volatile and popular pre-computed search results (i.e. such pre-computed search results which are regularly outdated by change of their corresponding underlying calculation data) is non-optimal. The inventors have realized that such strategy only yields short-term increases of the pre-computed search results' accuracy, but might cause an accuracy degradation in the long run. This is now described in more detail first, before then turning on the consequences of these recognitions drawn by the present invention.

To understand the drawbacks of a re-computation strategy particularly focusing solely on volatility and popularity of pre-computed search results, the following parameters for a pre-computed search result i are defined:

- The age $t_i$ of the pre-computed search result i: the time since the last computation of this pre-computed search result by the computation platform 3.

- The validity rate $\lambda_i$ of the pre-collected search result i is a measure of how long the pre-collected search result i remains valid or how fast the pre-collected search result i becomes invalid due to changes of the underlying original data. This validity rate of a given pre-computed search result i is, for example, statistically derived from the occurrence and the outcomes of past (re-)computations or (re-)collections and comparisons of the re-collected search result with its previous state or values. For example, it has been determined that a particular pre-collected search result i has a validity rate $\lambda_i$ of 10% per hour meaning that the probability of i being valid decreases by 10% every hour. At the time of its (re-)collection or (re-)computation, i is generally 100% valid. After one hour, i is valid with a probability of 90%. After two hours the validity of i is 81% (=90% decreased by another 10%). After three hours, i's probable validity is at 72.9%, and so on.

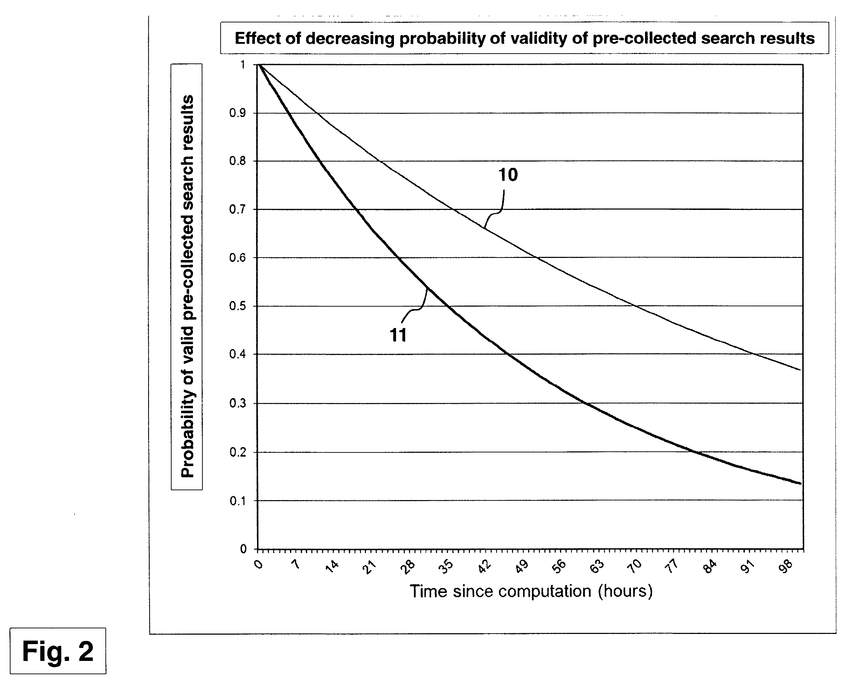

- The validity rate $\lambda_i$ may be employed to provide an estimate of the probability for a pre-computed search result to stay valid after a given time: ***P(unchanged after t) = e^{-\lambda_i t}***. This is also referred to as the expected accuracy $acc_i^t = e^{-\lambda_i t}$ or, more general, as the probability of a pre-computed search result being valid or, in other words, not being outdated. Two exemplary functions of this probable accuracy decreasing over time are depicted by Fig. 2. Function 10 represents a pre-computed search result which potentially remains more accurate (or, more correctly, stays at a higher probability of being valid over time) than another pre-computed search result associated with function 11. For example, the pre-computed search result represented by function 10 has 70% probability of being still valid at 35 hours after its last re-computation, while the other pre-computed search result characterized by function 11 is only valid up to about 50% at 35 hours after its latest re-computation. Functions 10 and 11 may also represent whole sets of pre-computed search results and then indicate proportions of the sets of pre-computed search results likely being valid at a time passed since the last re-computation of the set.

- The initial expected accuracy: pre-computed search results generated by the computation platform 3 may not necessarily be accurate even at computation time if e.g. the computation platform 3 itself bases its computations on cached (and therefore outdated) data. This leads to additional discrepancies between pre-computed search results computed by the computation platform 3 and computation results hypothetically been generated by accurate underlying data. This discrepancy may be measured if respective feedback is available It can be inferred e.g. from the previous computations that pre-computed search result **i** has a probability $a_i$ to be accurate at the time of computation by computation platform 3. It means that the probability for a pre-computed search result to be accurate after a given time **t** is $a_i\, e^{-\lambda_i t}$.

- The accuracy of the overall pre-computed search results kept in the search platform 4 according to this exemplary model may then be considered as the mean accuracy ("global accuracy"):

$$GlobalAccuracy = Avg\left(a_i\, e^{-\lambda_i t_i}\right).$$

- The "popularity" **pi** of the pre-computed search result i: this is the average access frequency to this pre-computed search result by the end users. As already briefly indicated above, it may be desirable to achieve a better accuracy for these pre-computed search result that are more often requested by the users than other pre-computed search results. Thus, the accuracy of the whole sum of pre-computed search results in the database 2 as seen by the end users may also be defined in that each accuracy value is weighted by the popularity of the respective pre-computed search result. Thus, the proportion of accurate accesses to the pre-computed search results as opposed to the expected proportion of accurate pre-computed search results is included:

$$UserAccuracy = \sum \frac{p_i}{p_{tot}}\, a_i\, e^{-\lambda_i t_i}$$ wherein **p_{tot}** is defined as the sum of all **p_i**.

These parameters assigned to any pre-computed search result form a probabilistic accuracy model utilized for deciding which pre-computed search results in the database 4 receive priority for re-computation. The values of these parameters are, for example, derived from and set according to statistical history data derived from a statistics server based on several days, weeks or months etc. of history. Every single pre-computed search result is modeled with these parameters in order to predict the state of the pre-computed search results and thus to predict the accuracy of all pre-computed search results.

In general, there are several ways of utilizing these information of the probabilistic model in order to prioritize and to decide which pre-computed search results to re-compute next. These prioritized pre-computed search results are also referred to as the "most critical" to re-compute. One natural approach for building a criticality criteria could be to find the computation orders that are supposed to increase at most the accuracy of the overall set of pre-compute search requests stored in the database 4 from the perspective of the end user ("User accuracy"), i.e. these pre-computed search requests with the highest likelihood of being invalid, weighted by their popularity. Such a strategy is, for example, disclosed by WO 99/22315 by proposing to refresh those objects in a cache with the highest product Pi = Psi(t) x Pri(h).

The approach determines the set of pre-computed search results C to re-compute which:

_ increases at most the user accuracy of the overall set of pre-computed search results stored in the database 4 (briefly "dd" for "data domain"):

$$UserAccuracy = \sum_{x_i \in dd} \frac{p_i}{p_{tot}}\ a_i\ e^{-\lambda_i t_i}\ ,$$

and
- costs less than R, R denoting the available resources for the next re-computation cycle):

$$Cost(C) = \sum_{x_i \in C} c_i \le R\ .$$

Re-computing pre-computed search result i would increase the user accuracy by $a_i \dfrac{p_i}{p_{tot}}(1 - e^{-\lambda_i t_i})$, which

is referred to as gain $G_i = a_i \dfrac{p_i}{p_{tot}}(1 - e^{-\lambda_i t_i})$.

This approach could be further refined by considering the computation costs (i.e. computing resources) required to re-compute a set of pre-computed search request. If the computation costs for re-computing pre-computed search request $x_i$ is denoted as $c_i$, the highest gain-cost-ratio is sought in order to increase the "user accuracy" most efficiently, i.e. best increase with least utilization of computation resources. This gain-cost-ratio can be defined to be

$$\frac{G_i}{c_i} = a_i \frac{p_i}{p_{tot}} \frac{1 - e^{-\lambda_i t_i}}{c_i}\ .$$

The process for determining the pre-computed search results to be re-computed then includes the following two activities:

- The re-computation controller 2 sorts the pre-computed search request by this gain-cost-ratio.

- The re-computation controller 2 selects the top pre-computed search requests from this sorted list until their cumulated computation costs reaches the amount of computation resources R available at the computation platform 3, e.g. for a certain period of time forming a re-computation cycle.

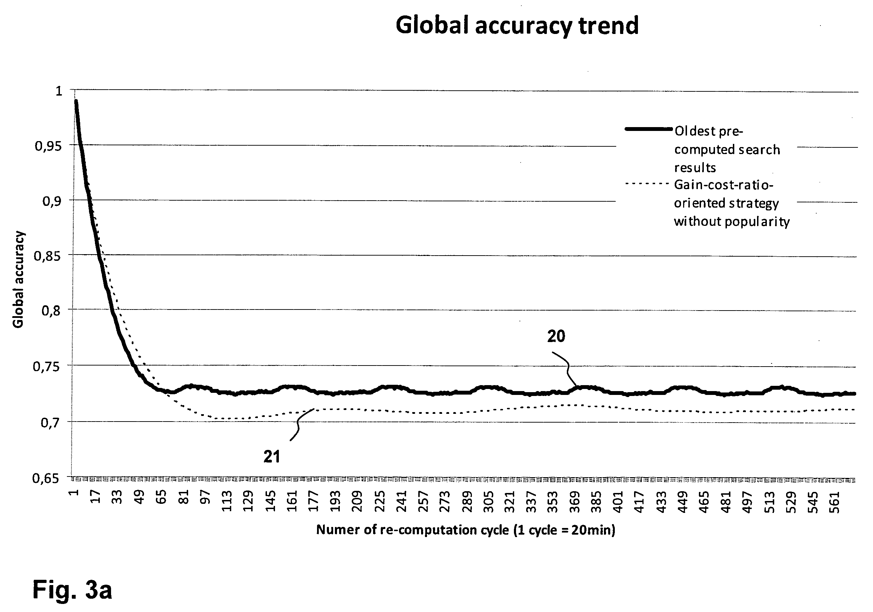

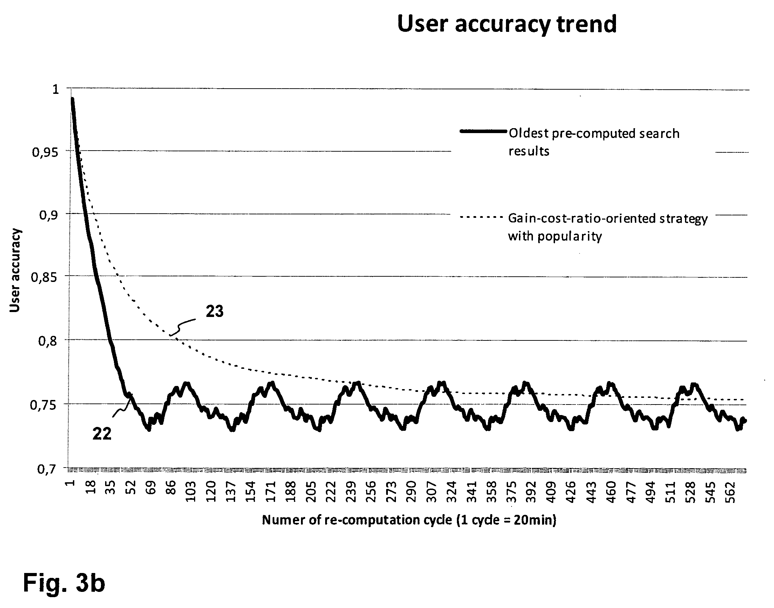

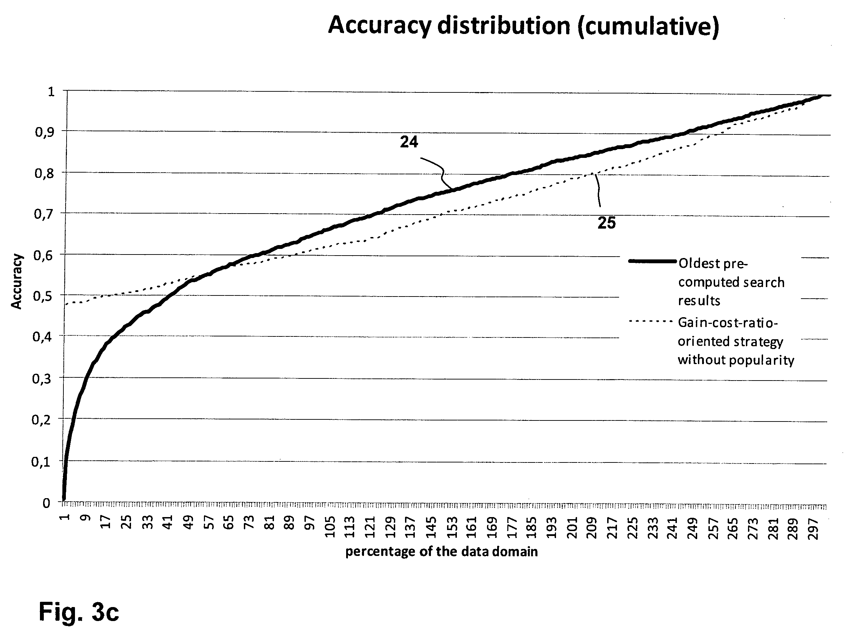

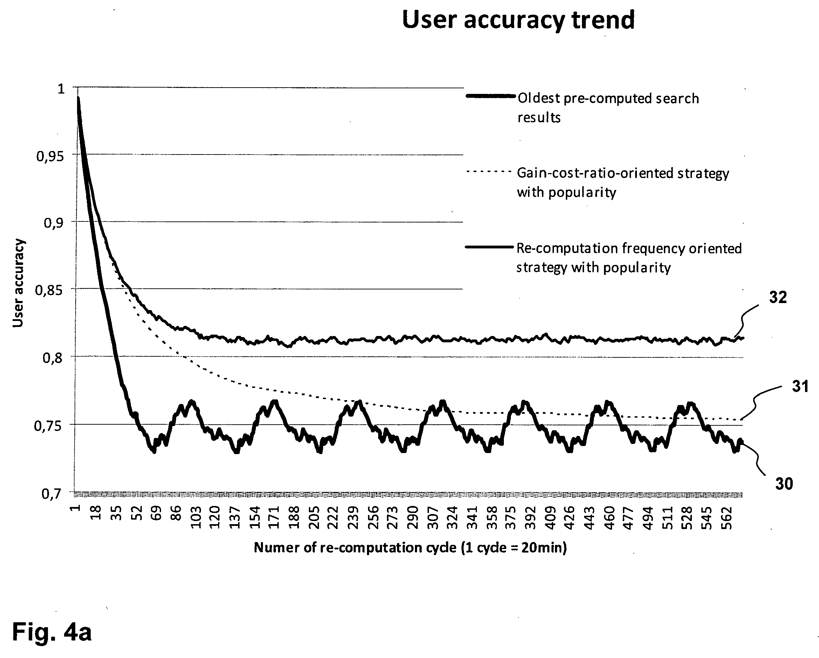

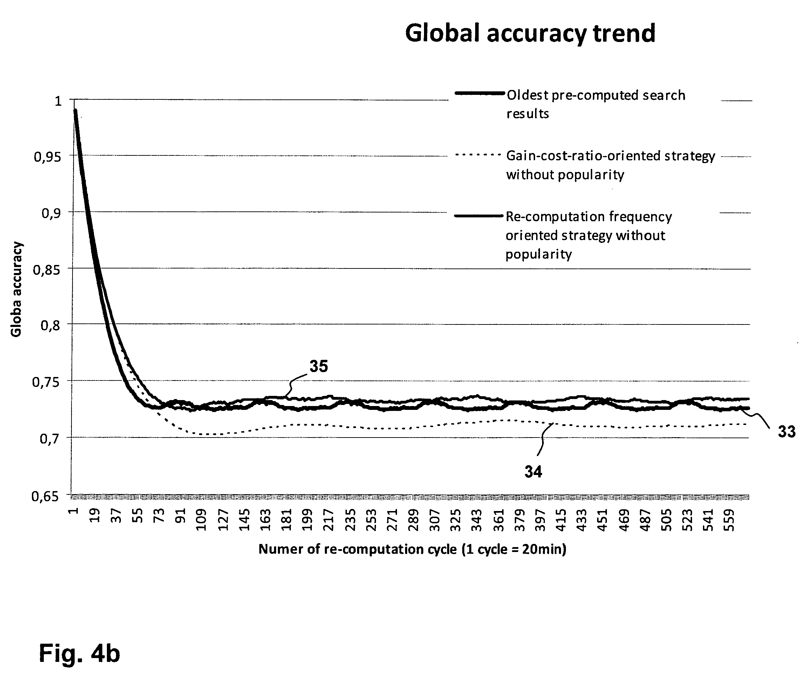

A behavior of the pre-computed search results' accuracy over time when employing this re-computation approach is indicated by Figures 3a, 3b and 3c. All three Figures, as well as the further Figures 4a and 4b , show graphs obtained by simulation on artificial pre-computed search results using a computation platform 3 equipped with an adequate amount of computation resources. A normal fluctuation within the underlying calculation data has been assumed, e.g. an average validity rate of about 2% per hour meaning 2% of the simulated pre-computed search results get outdated every hour (e.g. 98 of 100 pre-computed search results are still valid after one hour, after 10 hours, only $0,98^{10} = 82$ of the 100 pre-computed search results are still valid, and so on). It should be noted that this example of an average 2% validity rate does not imply a homogenous validity rate of all simulated pre-computed search results. Rather, the validity rate of individual simulated pre-computed search results may vary (as in reality) and is only in average at around 2%. To highlight the development of the pre-computed search results' accuracy, the simulations start out from a ideal situation with all of the pre-computed search results corresponding to their underlying calculation data, i.e. all pre-computed search results are valid and accurate, respectively.

Figure 3a shows the long-term development of the global accuracy of (all) the pre-computed search results stored in the search platform 4. As outlined above, the term "global accuracy" refers to the average popularity of all the simulated pre-computed search results. The number of re-computation cycles, which last for example 20 minutes each, is laid on the X axis. The percentage of valid pre-computed search results is plotted on the Y axis. Function 20 show the development of the pre-computed search results' validity when employing a naïve re-computation strategy, namely always re-compute those pre-computed search results which have not been re-computed for the longest period of time (the so-called "oldest" pre-computed search results). It can be seen that the global accuracy of the pre-computed search results rapidly decreases with the first tens of re-computation cycles. It falls below 75% around the 45th re-computation cycle and then constantly remains between 70% and 75%. Compared to this naïve re-computation approach, the strategy based on the gain-cost ratio as deduced in detail above is shown by graph 21 in Figure 3a. The gain-cost-ratio-oriented strategy shown by Figure 3a does, however, not consider the popularity of the pre-computed search results, i.e. the re-computation strategy is e.g. based on the formula $\dfrac{1-e^{-\lambda_i t_i}}{c_i}$. It is readily apparent that the gain-cost ratio approach does not significantly improve the global accuracy of the pre-computed search results. During the first tens re-computation cycles, the pre-computed search results' accuracy still stays above function 20, although insignificantly. However, from around re-computation cycle 70, function 21 even falls below function 20 and remains only slightly above 70% accuracy throughout the following re-computation cycles. Thus, in the long run, the gain-cost ratio approach actually leads to a decreased validity of the pre-computed search results, compared to the naive re-computation strategy of always re-computing the "oldest" pre-computed search results.

Figure 3b shows the effects of the gain-cost-ratio-oriented strategy in relation to the naïve re-computation strategy if the gain-cost-ratio-oriented strategy also considers the "popularity" of the pre-computed search results, i.e. the more popular pre-computed search results are re-computed more often than the less popular pre-computed search results (which is, as described above, reflected by the term "user accuracy" implying that the "user experience" is improved for which the pre-computed search results being more often requested than others are more important) . Thus, the gain-cost-ratio-oriented strategy of Figure 3b is characterized e.g. by the formula $p_i \dfrac{1-e^{-\lambda_i t_i}}{c_i}$. As indicated by graph 23 of Figure 3b, the gain-cost-ratio-oriented re-computation strategy generally achieves an improved accuracy of the pre-computed search results than the naive re-computation (being shown by graph 22). This improvement, however, is caused by the fact that the naïve re-computation strategy does, by definition, not take into account the popularity of the pre-computed search results. This results in the "up and down" of graph 22 because the re-computing unpopular search result leads to a decrease of the "user accuracy". Thus, the comparison between the naïve strategy and the gain-cost-ratio-oriented strategy considering popularity is biased to some extent. As we will, however, show further below, it can be drawn from Figure 3b (in comparison with Figure 4a further below) that the gain-cost-ratio-oriented strategy including popularity as visualized by Figure 3b yields a user accuracy which is still in the general range of the user accuracy resulting from the naive strategy.

Similar conclusions can be drawn from Figure 3c which shows a cumulative accuracy distribution of all pre-computed search results stored in search platform 4 at the end of the simulation. The X axis indicates the percentage of pre-computed search results, while the Y axis again indicates the percentage of pre-computed search results being valid. Again, line 24 indicates the naive "re-compute oldest first" strategy, while graph 25 shows the strategy based on the gain-cost ratio (i.e. a value of 40% on the X axis and 0,7 on the Y axis indicates that 40% of the pre-computed search results have an accuracy of less than 70%). It can be taken from Figure 3c that the gain-cost-ratio-oriented re-computation strategy achieves some improvements (compared to naive strategy) for the most inaccurate pre-computed search results. With that strategy, the most inaccurate about 18% of all pre-computed search results still have an accuracy of around 50%, whereas the naïve strategy leads to significantly more inaccurate 18% of the pre-computed search results, about 10% of the pre-computed search results even have an accuracy below 40%. On the other hand, the naïve re-computation strategy appears to yield superior results for the other 80% more accurate the pre-computed search results, as can be inferred from the progress of the curves 24 and 25 to the right-hand side of Figure 3c.

Thus, Figures 3a, 3b and 3c convey the insight that the gain-cost-ratio-oriented re-computation strategy is not optimal. To the contrary, it generally results in a decreased average accuracy of pre-computed search results, compared with the naive strategy to re-compute the "oldest" pre-computed search results, when considering the long-term development. Hence, selecting pre-computed search results for re-computation by employing the gain-cost ratio apparently constitutes a short-term optimization only. The inventors have recognized that this strategy spends too much computing resources on the very volatile pre-computed search results, i.e. pre-computed search results which become invalid more often than others. It is the goal of this strategy to maintain these volatile pre-computed search results at an acceptable accuracy level. In other words, with reference to Figure 3c, the gain-cost-ratio oriented strategy focuses on the left-hand side of Figure 3c and re-computes the 18% or 20% of the pre-computed search results with the least accuracy more often than the other 80% with the effect that the 18% or 20% remain at a relatively moderate accuracy level, while the other 80% are virtually neglected. On the other hand, the naive algorithm leaves the 18% or 20% of the pre-computed search results with the least accuracy in a "bad state" (i.e. with very low accuracy down to 0% to 45%), but achieves a better average result for the other 80% (Figure 3c) and in long term (Figure 3a).

Thus, a re-computation strategy is sought which provides superior accuracy of pre-computed search results in the long run.

To this end, the re-computation controller 2 assigns a re-computation indicator to any of the pre-computed search results stored in the database 4. This re-computation indicator indicates the priority for re-computation. The re-computation indicator is formed in particular way, by generally taking into account the following factors:

- the probability that the pre-computed search result i is valid or outdated, i.e. the "expected accuracy" as introduced above;

- optionally, an access frequency measure which indicates a request frequency from the database 4, i.e. the "popularity" as introduced above;

- a re-computation frequency; and

- a measure for the computation resources needed for the re-computation.

More specifically, in some embodiments, the re-computation indicator for a particular pre-computed search result i is generated by weighting the probability that the pre-computed search result i is still valid ("expected accuracy") with the access frequency measure of the pre-computed search result i indicating the frequency of the pre-computed search result i being requested from the database 4 ("popularity") and by multiplying the re-computation frequency of the search result i with the measure for the computation resources needed to re-compute pre-computed search result i. In some embodiments, both products are divided in order to form the re-computation indicator.

By utilizing the re-computation indicator associated with any of the pre-computed search results stored in the database 4, the re-computation controller 2 selects those pre-computed search results for re-computation which have a re-computation indicator indicating the highest need for re-computation. The amount of pre-computed search results re-computed by the computation platform re-computed within a given period of time, e.g. 20 minutes (also referred to as a "re-computation cycle"), is limited by the computation platform's 3 computation resources available for the re-computation the period of time. After having identified the pre-computed search results being most critical to re-compute, the re-computation controller 2 issues a re-computation order to the computation platform 3 to re-compute them within the next re-computation cycle. The computation platform 3 executes this order in a batch-oriented manner and forwards the re-computed search results to the search platform 4.

In some embodiments, the computation platform also returns the result of the re-computation back to the re-computation controller 2 at the same time. This enables the re-computation controller 2 to continuously assess the re-computation indicator of the pre-computed search results as they are currently stored in the database 4.

A particular example of a re-computation indicator is now presented in more detail and in a more formal manner.

This example starts out from the gain-cost ratio which has been defined above as $a_i \dfrac{p_i}{p_{tot}} \dfrac{1-e^{-\lambda_i t_i}}{c_i}$ or, neglecting the

initial accuracy $a_i$, as $\dfrac{p_i}{p_{tot}} \dfrac{1-e^{-\lambda_i t_i}}{c_i}$ .

Re-computing a particular pre-computed search result i yields an increase in terms of user accuracy increase, namely the gain $G_i = a_i \dfrac{p_i}{p_{tot}} \left(1 - e^{-\lambda_i t_i}\right)$.

If this particular pre-computed search result i is re-computed more often than another pre-computed search results i, for example, twice as often, it can be considered that re-computation of i is twice more expensive than the re-computation of i (assuming that a single re-computation of i and a single re-computation of i consumes the same amount of computation resources of the computation platform 3 - which is not necessarily the case as explained further below). The expense of re-computing pre-computed search result i in terms of the relative number of re-computations can be thus defined as:

$$ComputationExpense_i = c_i \times f_i$$

where $f_i$ denotes a refresh frequency of pre-computed search result i.

Thus, instead of re-computing the pre-computed search results with the highest immediate gain, i.e. the gain-cost ratio as presented above, the pre-computed search results with the highest gain-expense ratio are selected for re-computation, i.e. with the highest $\dfrac{G_i}{ComputationExpense_i}$ . For reasons of brevity, this re-computing pre-computed search results by using this re-computation criteria is briefly referred to as "re-computation frequency oriented" strategy.

One difficulty of this approach is that the re-computation frequency $f_i$ is generally an unknown value. It is, however, for example be approximated by $\dfrac{1}{t_i}$ , where $t_i$ denotes the time since the last re-computation of pre-computed search result i.

Thus, $\dfrac{c_i}{t_i}$ can be used as an estimation of the re-computation expense. The re-computation strategy being directed to a long term increase of the pre-computed search results' accuracy then selects pre-computed search results with highest re-computation indicator being defined as $\dfrac{G_i \times t_i}{c_i} = \dfrac{p_i}{p_{tot}} \dfrac{1 - acc_i^{t_i}}{c_i} \times t_i$ .

The effects of the re-computation frequency oriented strategy presented herein, such as the particular example of the re-computation indicator given above, are visualized by Figures 4a and 4b.

Figure 4a shows the user accuracy achieved by the re-computation frequency oriented strategy (indicated by graph 32) in comparison with the results yielded by the naïve strategy of always re-computing the oldest pre-computed search results (indicated by graph 30) and the gain-cost-ratio-oriented strategy including consideration of the "popularity" as explained above (indicated by graph 31), e.g. given by $p_i \times \dfrac{1 - acc_i^{t_i}}{c_i} \times t_i$ . In can be taken from these graphs 30, 31, 32 that the user accuracy of the pre-computed search results stored in the search platform 4 is, in the long run, generally increased by about 7% as compared to the naive strategy to always re-compute the oldest pre-computed search results and by about 5% as compared to the gain-cost-ratio-oriented strategy.

On the other hand, also the global accuracy is improved by a re-computation frequency oriented strategy which does not take into account the "popularity" of the pre-computed search results, as can be inferred from Figure 4b. Figure 4b is based on Figure 3a as discussed above and additionally visualizes the effect of the re-computation frequency oriented strategy being based on a re-computation indicator of e.g. $\dfrac{1 - acc_i^{t_i}}{c_i} \times t_i$ . Figure 4b demonstrates that the re-computation frequency oriented strategy yields a significantly improved global accuracy compared to the gain-cost-ratio-oriented strategy (also employed without considering the popularity) and also a global accuracy of the pre-computed search results above that achieved by the naive re-computation strategy of always re-computing the oldest pre-computed search results.

Optionally, in some embodiments, re-computation indicator is additionally based on the initial accuracy value $a_i$ indicating the expected accuracy of the pre-computed search result i at the time of its re-computation, as it has been introduced further above. In these embodiments, the re-computation indicator is, for example, defined by

$$\dfrac{G_i \times t_i}{c_i} = \dfrac{p_i}{p_{tot}} \dfrac{a_i \left(1 - acc_i^{t_i}\right)}{c_i} \times t_i$$
.

Further variations of defining the re-computation indicator by the same principles are within the scope of the present invention. For example, the re-computation indicator may be given in a more generic way, with a probabilistic model giving the probability of pre-computed search result i to be invalid as $P_{invalid(i)}$, irrespective how $P_{invalid(i)}$ is calculated or estimated. In this more general example, the re-computation indicator is e.g. defined as

$$\frac{p_i}{p_{tot}} \times P_{invalid}(i) \times \frac{t_i}{c_i}$$

As explained above, some embodiments may be directed to optimize the global accuracy without taking into account the end user perspective, i.e. the "popularity" of the pre-computed search results. In these embodiments, the re-computation indicator is given by $P_{invalid}(i) \times \frac{t_i}{c_i}$. i As described with respect to the embodiments above, $P_{invalid(i)}$ may be given by $P_{invalid}(i) = (1\text{-}e^{-\lambda_i t_i})$. In some embodiment, an initial accuracy factor is further taken into account so that $P_{invalid}(i) = a_i(1\text{-}e^{-\lambda_i t_i})$.

Other embodiments may neglect the re-computation resources required to re-compute a pre-computed search result. In particular, this applies to environments in which every the re-computation of any pre-computed search result requires the same amount of computation resources.

Some embodiments feature a further refined re-computation indicator directed to a re-computation strategy for long-term optimization of the user accuracy implementing the re-computation frequency oriented strategy as deduced above. This refined re-computation indicator corresponds to the following expression:

$$-\frac{p_i}{c_i}\left(t_i e^{-\lambda_i . t_i} + \frac{e^{-\lambda_i . t_i} - 1}{\lambda_i}\right)$$

This is mathematically derived as follows:

A set of re-computation frequencies is defined $\{f_i\}_{i \in dd}$ of a pre-computed search result i. Corresponding periods between re-computation of pre-computed search result i are defined as $T_i = \frac{1}{f_i}$.

If the frequency $f_j$ is applied to the pre-computed search result j, then the average accuracy of j is given by

$$\overline{Acc_i} = \frac{1}{T_i}\int_0^{T_i} e^{-\lambda_i . t}dt = \frac{(1 - e^{-\lambda_i . T_i})}{\lambda_i T_i}.$$

The average user accuracy is then defined as

$$\overline{UserAcc} = \sum_{x_i \in dd}\frac{p_i}{p_{tot}}\overline{Acc_i} = \sum_{x_i \in dd}\frac{p_i}{p_{tot}}\frac{(1 - e^{-\lambda_i . T_i})}{\lambda_i T_i}.$$

If the computation resources available for a period of time are equal for any period of time then:

$\sum_{x_i \in dd} c_i f_i = R$ where **R** are the computation resources allocated per period of time and $x_i$ denotes the pre-computed search results. By replacing the re-computation frequency **fi** with the time periods $T_i$ between the re-computations, it follows that

$$\sum_{x_i \in dd} c_i f_i = \sum_{x_i \in dd} \frac{c_i}{T_i} = R \quad .$$

The set of $\left\{ (T_i)_{x_i \in dd}, \sum_{x_i \in dd} \frac{c_i}{T_i} = R \right\}$ can be denoted as **H**.

Adding a multiplicator of Lagrange results in a definition of

$$l\left(\theta, (T_i)_{x_i \in dd}\right) = \sum_{x_i \in dd} \frac{p_i}{p_{tot}} \frac{\left(1 - e^{-\lambda_i . T_i}\right)}{\lambda_i T_i} + \theta \left( R - \sum_{x_i \in dd} \frac{c_i}{T_i} \right) \quad .$$

Within the set of **H**, it applies that $l(\theta, (T_i)_{x_i \in dd}) = \overline{UserAcc}.$

Thus, the user accuracy and $l$ have the same maximum in **H**. And it happens that the maximum of $l(\theta, (T_i)_{x_i \in dd})$ is given in **H** because $l$ has its maximum for

$$\frac{\partial l}{\partial \theta} = R - \sum_{x_i \in dd} \frac{c_i}{T_i} = 0.$$

Thus, finding the maximum of $\overline{UserAcc}$ in **H** is equivalent to find the maximum of $l$

$$\frac{\partial l}{\partial T_i} = \frac{\partial}{\partial T_i}\left( \frac{p_i}{p_{tot}} \frac{1 - e^{-\lambda_i . T_i}}{\lambda_i T_i} \right) - \theta \frac{\partial}{\partial T_i}\left( \frac{c_i}{T_i} \right)$$

$$\frac{\partial l}{\partial T_i} = -\frac{p_i}{p_{tot}} \frac{e^{-\lambda_i . T_i}}{T_i} + \left( \frac{p_i}{p_{tot}} \frac{1 - e^{-\lambda_i . T_i}}{\lambda_i T_i^2} \right) + \theta \frac{c_i}{T_i^2}$$

The maximum is found if $\frac{\partial l}{\partial T_i} = 0.$

If we multiply by $p_{tot} \frac{T_i^2}{c_i}$, we have a maximum for

$$-\frac{p_i}{c_i}\left( T_i e^{-\lambda_i . T_i} + \frac{1 - e^{-\lambda_i . T_i}}{\lambda_i} \right) + \theta \, p_{tot} = 0$$

I.e.

$$\mathcal{F}_i(T_i) \triangleq -\frac{p_i}{c_i}\left( T_i e^{-\lambda_i . T_i} + \frac{e^{-\lambda_i . T_i} - 1}{\lambda_i} \right) = const$$

The re-computation strategy optimizing the user accuracy indicator can then be employed as follows: The pre-computed search results with the highest $\mathcal{F}_i(t_i)$ as defined here are to be recomputed first in order to have the $\mathcal{F}_i(t_i)$

as equal as possible ($\mathcal{F}_i$ is an increasing function).

It is interesting to compare this refined re-computation indicator with previous re-computation indicator described for the re-computation frequency oriented strategy above, e.g. $p_i \dfrac{1-acc_i^{t_i}}{c_i} \times t_i$ which was specifically introduced above:

$$\mathcal{F}_i(T_i) - \frac{p_i\,(1-e^{-\lambda_i T_i})}{c_i}\,t_i = \frac{p_i}{c_i}\frac{1-\lambda_i.T_i - e^{-\lambda_i.T_i}}{\lambda_i} = O\left(\frac{p_i}{c_i}\lambda_i\,T_i^{\,2}\right)$$

This means that for not too low re-computation frequencies that are of a significant amount (i.e. the time period since the last re-computation is not too long), the re-computation indicator introduced further above is a good approximation of the refined re-computation indicator additionally presented here.

Furthermore, if the initial accuracy is re-introduced, the refined re-computation indicator is given by

$$-\frac{a_i p_i}{c_i}\left(t_i e^{-\lambda_i.t_i} + \frac{e^{-\lambda_i.t_i}-1}{\lambda_i}\right).$$

The re-computation frequency oriented strategy has so far been discussed by assuming that re-computation of any pre-computed search result by the computation platform 3 requires substantially the same amount of computation resources irrespective of whether the pre-computed search results are computed separately, together with adjacent search results (e.g. same origin, destination and adjacent dates) or any other non-adjacent search results. In practice, however, this assumption cannot be made in general because, for example, certain pre-computed search results and/or their corresponding underlying calculation data are interrelated to each other. Re-computing such interrelated pre-computed search results together (i.e. within the same re-computation cycle) could include synergetic effects and may thus be more efficient than re-computing them separately. Thus, when interrelated pre-computed search results are re-computed together the computation costs per individual pre-computed search result is generally less than the computation cost per individual pre-computed search result required if they are re-computed separately, i.e. in different re-computation cycles. The re-computation frequency oriented strategy above has been deduced without taking into account such synergetic effects of re-computing certain interrelated pre-computed search results as a whole package within a single re-computation cycle.

To promote understanding of interrelated pre-computed search results, a particular example is given next. This example originates from a particular application of the distributed database environment 1 in the travel industry, i.e. the database 4 keeps travel-related pre-computed search results and makes them available to end users. The following example, however, is not supposed to limit the issue of interrelated pre-computed search results such a travel data application. Rather, similar or analog conditions allowing a synergetic and therefore more efficient re-computation of interrelated pre-computed search results are present in database systems independent from the content of pre-computed data sets. In general, it can be said that any process of re-computing pre-computed search results will aim at a mutualization of re-computation sub-tasks that have to be executed commonly for any pre-computed search result of a set of pre-computed search results. Thus, re-computing pre-computed search results together that have such re-computation task in common is generally favorable over re-computing pre-computed search requests together which do not share similar re-computation sub-tasks.

In a particular embodiment, the pre-computed search requests are round-trip flight data records, each specifying a travel origin and destination and a departure and arrival date (or, alternatively to the arrival date, a stay duration relating to the departure date). In this example, the database 4 contains pre-computed round-trip travel recommendations for any origin-destination pair and any departure-arrival-date pair to be covered. Table 1 indicates a small excerpt from the pre-computed travel recommendations kept in database 4, the excerpt being travel recommendations for the city pair Nice-Boston ("NCE-BOS") and for departure dates from 1st July to 5th July with maximum stay duration of five days, the abbreviation "pc-fr x" standing for "pre-computed travel recommendation number x".

Table 1

| NCE-BOS | Dep JUL 1. | Dep JUL 2. | Dep JUL 3. | Dep JUL 4. | Dep JUL 5. |
|---|---|---|---|---|---|
| Ret JUL 2. | pc-fr 0 | -- | -- | -- | -- |
| Ret JUL 3. | pc-fr 1 | pc-fr 5 | -- | -- | -- |

(continued)

| NCE-BOS | Dep JUL 1. | Dep JUL 2. | Dep JUL 3. | Dep JUL 4. | Dep JUL 5. |
|---|---|---|---|---|---|
| Ret JUL 4. | pc-fr 2 | pc-fr 6 | pc-fr 10 | -- | -- |
| Ret JUL 5. | pc-fr 3 | pc-fr 7 | pc-fr 11 | pc-fr 15 | -- |
| Ret JUL 6. | pc-fr 4 | pc-fr 8 | pc-fr 12 | pc-fr 16 | pc-fr 20 |
| Ret JUL 7. | -- | pc-fr 9 | pc-fr 13 | pc-fr 17 | pc-fr 21 |
| Ret JUL 8. | -- | -- | pc-fr 14 | pc-fr 18 | pc-fr 22 |
| Ret JUL 9. | -- | -- | -- | pc-fr 19 | pc-fr 23 |
| Ret JUL 10. | -- | -- | -- | -- | pc-fr 24 |

The re-computation of a particular pre-computed travel recommendation, for example pc-fr 9 relating to a departure date of 2nd July and a return date of 7th July, is roughly performed by the computation platform 3 by the following sub-tasks:

1: Retrieve the possible geographic routes between Nice and Boston including intermediate stops/change, for example: Nice-Paris-Boston, Nice-London-Boston, Nice-New York-Boston, Nice-Paris-New York-Boston, etc.

2: Find all the possible flights on all the routes retrieved by activity 1: for example Air France 123 and Emirates 7123 on the leg Nice-Paris, Air France 456 and American Airlines 564 and United Airlines 125 on the leg Paris-New York, etc.

a. This activity is performed for the outward part of the travel on the departure date 2nd Jul (sub-task 2a) and
b. for the return part of the travel on the return date 7th July (sub-task 2b) because flights are generally not available on all days.

3: Check the availability on all the flights determined by activities 2a and 2b, i.e. on 2nd Jul for the outbound part of the journey (= sub-task 3a) and on 7th Jul for the return part of the journey (= sub-task 3b).

4: Retrieve fares that can be applied to these flights on these dates. A typical fare is rule which yields a price for the whole journey. However, fares may also be valid for the outbound and for the inbound part of the journey on their respective dates in which case they can be retrieved once for the outbound part (= sub-task 4a) and once for the return part of the journey (= sub-task 4b). Fares have restrictions on the departure dates, on the return dates, on the flights to be applied on, and many others. Fares can be combined together, discounted in some specific cases and so on.

5: The best solution, i.e. the connection with the best price, is kept, returned by the computation platform 3 and stored by the database 4 as pc-fr 9.

These sub-tasks are performed in a similar fashion for any pre-computed travel recommendation. When performing the re-computation for the whole set of pre-computed travel recommendations (pc-fr 0 to pc-fr 24), several re-computation sub-tasks can be mutualized. Executing sub-task 1 is necessary only once for the whole set of pre-computed travel recommendations pc-fr 0 to pc-fr 24 because all these pre-computed travel recommendations belong to the same origin-destination city pair Nice-Boston. Thus, sub-task 1 does not need to be re-done for every pre-computed search result pc-fr 0 to pc-fr 24.

The sub-tasks 2a, 3a and sub-task 4 are, on the other hand, specific to one departure date. They can therefore be re-used for all pre-computed travel recommendations relating to one and the same departure date. Table 2 indicates this for the pre-computed travel recommendations pc-fr 5 to pc-fr 9 relating to the departure date of 2nd July:

Table 2

| NCE-BOS | Dep JUL 1. | Dep JUL 2. | Dep JUL 3. | Dep JUL 4. | Dep JUL 5. |
|---|---|---|---|---|---|
| Ret JUL 2. | pc-fr 0 | -- | -- | -- | -- |

(continued)

| NCE-BOS | Dep JUL 1. | Dep JUL 2. | Dep JUL 3. | Dep JUL 4. | Dep JUL 5. |
|---|---|---|---|---|---|
| Ret JUL 3. | pc-fr 1 | Common Sub-tasks: 2a, 3a, 4a | -- | -- | -- |
| Ret JUL 4. | pc-fr 2 | | pc-fr 10 | -- | -- |
| Ret JUL 5. | pc-fr 3 | | pc-fr 11 | pc-fr 15 | -- |
| Ret JUL 6. | pc-fr 4 | | pc-fr 12 | pc-fr 16 | pc-fr 20 |
| Ret JUL 7. | -- | | pc-fr 13 | pc-fr 17 | pc-fr 21 |
| Ret JUL 8. | -- | -- | pc-fr 14 | pc-fr 18 | pc-fr 22 |
| Ret JUL 9. | -- | -- | -- | pc-fr 19 | pc-fr 23 |
| Ret JUL 10. | -- | -- | -- | -- | pc-fr 24 |

Likewise, the sub-tasks 2b, 3b and 4b are specific to one return date and, thus, are commonly performed for pre-computed travel recommendations relating to one and the same return date. This is illustrated by table 3 for the pre-computed travel recommendations pc-fr 9, pc-fr 13, pc-fr 17 and pc-fr 21, all of which refer to the return date of 7th July:

Table 3

| NCE-BOS | Dep JUL 1. | Dep JUL 2. | Dep JUL 3. | Dep JUL 4. | Dep JUL 5. |
|---|---|---|---|---|---|
| Ret JUL 2. | pc-fr 0 | -- | -- | -- | -- |
| Ret JUL 3. | pc-fr 1 | pc-fr5 | -- | -- | -- |
| Ret JUL 4. | pc-fr 2 | pc-fr 6 | pc-fr 10 | -- | -- |
| Ret JUL 5. | pc-fr 3 | pc-fr 7 | pc-fr 11 | pc-fr 15 | -- |
| Ret JUL 6. | pc-fr 4 | pc-fr 8 | pc-fr 12 | pc-fr 16 | pc-fr 20 |
| Ret JUL 7. | -- | Common Sub-tasks: 2b, 3b, 4b | | | |
| Ret JUL 8. | -- | -- | pc-fr 14 | pc-fr 18 | pc-fr 22 |
| Ret JUL 9. | -- | -- | -- | pc-fr 19 | pc-fr 23 |
| Ret JUL 10. | -- | -- | -- | -- | pc-fr 24 |

Thus, in summary, only a part of sub-task 4, namely retrieving such fares which are not valid for the whole outbound part of the travel and for the whole return part of the travel, but are specific for sub-sets or particular travel recommendations, has to be performed separately for each pre-computed travel recommendation, while the other sub-tasks can be performed in common for all pre-computed travel recommendations relating to the same origin-destination city pair (true for sub-task 1) or at least for pre-computed travel recommendations relating to the same departure date (sub-tasks 2a, 3a and 4a) or to the same return date (sub-tasks 2b, 3b and 4b). Consequently, the more pre-computed travel recommendations relate to one origin-destination city pair and the more pre-computed travel recommendations relate to one departure date and return date, respectively, the more computation resources can be spared by mutualizing these sub-tasks across the respective pre-computed flight requests.

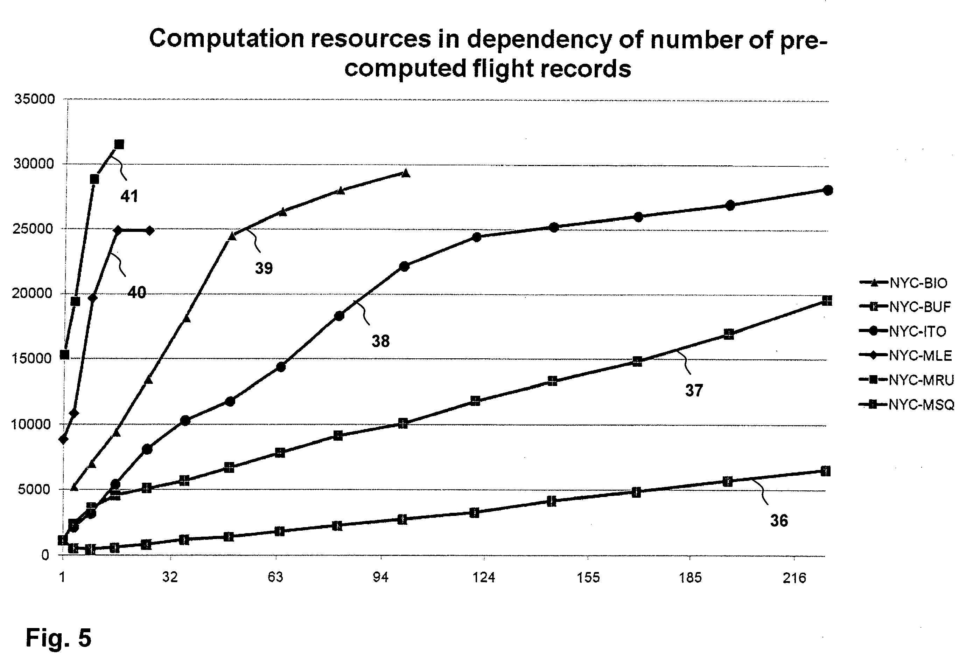

This relationship between increasing synergetic effects with an increasing number of pre-computed travel recommendations relating to an origin-destination city pair and to one departure or return date is also visualized by Figure 5. Figure 5 shows six graphs of exemplary pre-computed travel recommendation sets, each set belonging to one origin-destination city pair. In decreasing number of pre-computed travel recommendations being associated with a city pair, graph 36 relates to the city pair New York-Buffalo, graph 37 to New York-Minsk, graph 38 to New York-Hilo on Hawaii, graph 39 to New York-Bilbao, graph 40 to New York-Male and, finally, graph 41 to New York-Mauritius. The X axis of the diagram of Figure 5 denotes the number of pre-computed travel recommendations, while the Y axis plots a measure of re-computation resources needed to perform a re-computation of pre-computed travel recommendations, namely CPU time.

On the one hand, Figure 5 shows that re-computation of some pre-computed travel recommendation sets requires more computation resources than others. For example, re-computing pre-computed travel recommendations from set 41 including pre-computed travel recommendations for flights between New York and Mauritius is generally more costly than re-computing pre-computed travel recommendations from set 36 including pre-computed travel recommendations for flights between New York and Buffalo. This general difference of the amount of computation resources needed for re-computing pre-computed travel recommendations is taken into account by the including the re-computation costs C into the re-computation indicator as it has been explained in detail above. However, the graphs of Figure 5 also indicate that the re-computation costs vary with the number of pre-computed travel recommendations of a set being re-computed. In general, the more pre-computed travel recommendations relating to one set are re-computed together, the less computation resources are needed to re-compute each pre-computed travel recommendation. For example, graph 36 indicates that re-computing 32 pre-computed travel recommendations of the set New York-Buffalo requires about 1000 ms of CPU, i.e. about 31.25 ms of CPU per pre-computed travel recommendation, while re-computing 170 pre-computed travel recommendations requires about 5000 ms of CPU, i.e. only about 29.4 ms of CPU per pre-computed travel recommendation. With respect to graph 38 relating to the city pair New York-Hilo, re-computing 35 pre-computed travel recommendations from that set requires about 10,000 ms of CPU, i.e. 286 ms of CPU per pre-computed travel recommendation, while re-computing 140 pre-computed travel recommendations from that set requires about 25,000 ms of CPU, i.e. only 178.5 ms of CPU per pre-computed travel recommendation. Hence, it is clear that the pre-computed travel recommendations belonging to one origin-destination city pair are interrelated in terms of computing resources required for their re-computation as explained above.

In other words, the computation resources needed to re-compute a pre-computed search result i generally depend on whether or not other pre-computed search results related to the pre-computed search result i are re-computed during the same computation cycle. Thus, the computation resources to re-compute the pre-computed search results are not static, but vary with the selection of the set of pre-computed search results to be re-computed during the computation cycle.

These computation resources varying with the number of interrelated pre-computed search results being re-computed together are taken into account by the re-computation strategy employed by some embodiments as follows:

Generally, the computation resources needed to re-compute the pre-computed search results to be re-computed are dynamically estimated by the re-computation controller 2 while selecting the pre-computed search results to be re-computed during the next computation cycle. This estimation depends on which other pre-computed search results related to the pre-computed search result i are selected for re-computation during the next re-computation cycle. In some embodiments, this is achieved by an iteratively refined estimation of the computation resources needed to re-compute the pre-computed search results to be re-computed while determining the subset of the pre-computed search results to be actually re-computed. This iterative estimation of the varying computation resources includes the following activities:

a) For any pre-computed search result i, the computation resources ci needed to re-compute pre-computed search result i are initialized with a first approximated value. This value assumes that the re-computation of pre-computed search result i is independent from the computation of other pre-computed search results selected for re-computation during the next re-computation cycle.

b) A portion of the pre-computed search results for re-computation is then selected. This selection is, for example, done in accordance with the re-computation indicator as it has been explained above. The selected portion, however, does not already exhaust the complete available computation resources of the computation platform 3 to 100%, but only consumes a part of the available computation resources for the next re-computation cycle. For example, in some embodiments, the selected portion only requires a given percentage of the computation platform's 3 computation resources available for re-computation within the next re-computation cycle. In the embodiments, specific percentages are used as the given percentage, such as 1%, 2%, 5%, 10%, 20%, 25%, 30%, 40%, 50% or 60% or higher values below 100%. In any event, the selection of this portion of pre-computed search results to be re-computed in the next re-computation cycle is based on the current values for the computation resources needed to re-compute the portion of pre-computed search results, i.e. in the very first selection iteration still on the basis of the values of the initialization activity a), i.e. without taking into account any interrelations or dependencies between the pre-computed search results to be re-computed.

c) For any pre-computed search result i (including both, the pre-computed search results selected by activity b) before and the pre-computed search results not being selected by activity b)), the re-computation controller 2 re-assesses the computation resources $c_i$ needed to re-compute pre-computed search result i by taking into account which pre-computed search results related to the pre-computed search result i have been selected for re-computation in activity c). For the pre-computed search results being already selected by activity b), this re-assessment provides refined values of $c_i$ and in total a refined value of the percentage of the computation platform's 3 computation resources available for re-computation within the next re-computation cycle necessary to re-compute the pre-computed search results selected for re-computation in the next computation cycle so far. To the extent that interrelated pre-computed search results have been selected in the current iteration, the refined value of $\Sigma\, c_i$ of the already selected pre-computed search results is generally less than the (theoretic) value of $\Sigma\, c_i$ of the already selected pre-computed search results neglecting their interrelation and assuming a re-computation of the already selected pre-computation without re-computing any interrelated pre-computed search results. The re-assessment of the pre-computed search results not (yet) being selected for re-computation is sensible because they are all candidates for a selection in the next iteration(s). If one or more pre-computed search results interrelated to not-yet-selected pre-computed search results has/have been selected in the previous activity b), the computation resources needed for re-computing these not-yet-selected pre-computed search results with interrelated pre-computed search result(s) are generally lower (and is therefore generally to be decreased by this activity c)) than the computation resources required if no interrelated pre-computed search result was selected for pre-computation.

d) The re-computation controller 2 refers back to activity b) if less than 100% of the computation platform's overall computation resources available for re-computation within the next re-computation cycle is exhausted.

Generally, this approach is independent from the specific manner of how the re-computation indicator is calculated or which kind of re-computation strategy is employed.

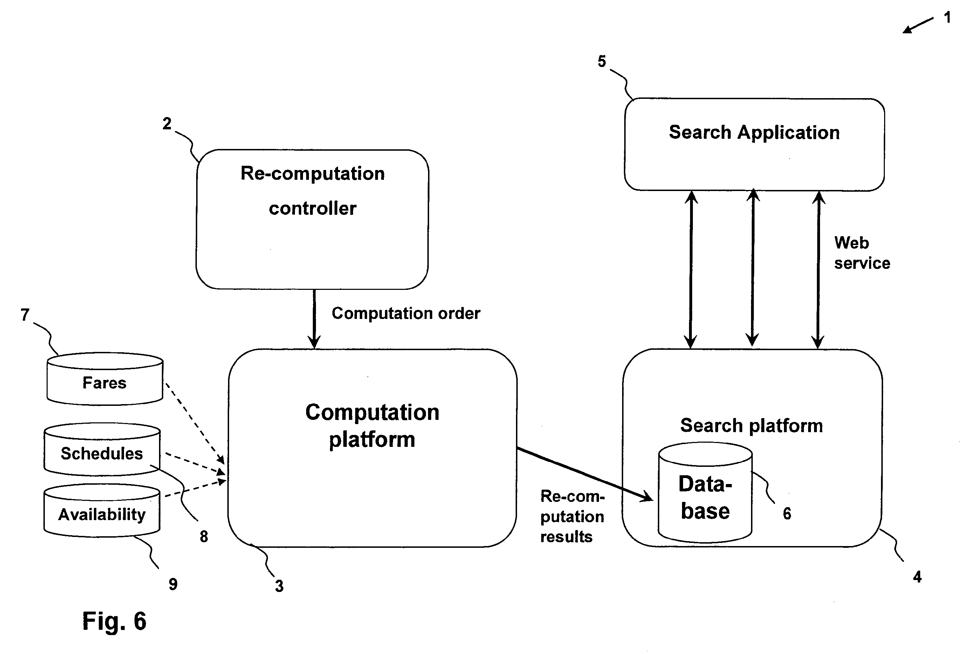

Figure 6 shows a travel-related example of a database environment 1 depicting additional details in comparison with Figure 1. The re-computation controller 2 maintains a representation of the pre-computed search results stored by the search platform 4 e.g. in database 6. The re-computation controller 2 controls the re-computation of the pre-computed search results by employing the re-computation indicator as described in detail above. Pre-computed search results to be re-computed are ordered to be re-computed by computation orders which the re-computation controller 2 transmits to the computation platform 3. The computation platform re-computes the respective pre-computed search results. As depicted by the exemplary environment 1 of Figure 6, the re-computation performed by the re-computation platform 3 may be based on underlying data such fares kept in a fares database 7, transportation schedules kept in schedule database 8 and transportation availability data kept in availability database 9. The re-computation platform 3 sends the re-computed search results to search platform 4 and returns them to re-computation controller 2. As outlined above, the re-computation controller 2 may be integrated with the computation platform 3 and/or the search platform 4. The pre-computed search results updated in this manner are requested by a search application 5 from the search platform 6 e.g. by using web service interfaces.

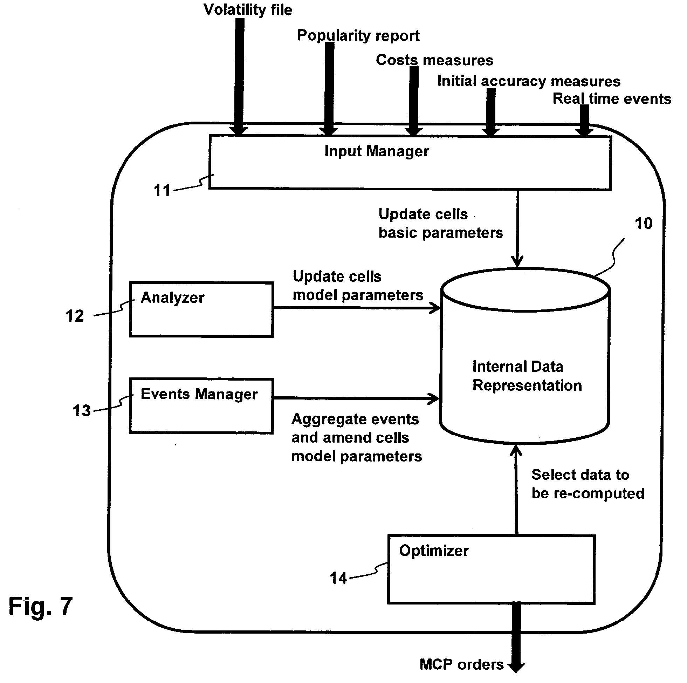

Now referring to Figure 7, some embodiments employ a modular structure of the re-computation controller 2 to achieve the methods described above. Some of these parts are already described in the unpublished International application PCT/EP2013/002390 to which it is referred for a more detailed explanation of the re-computation controller's structure. Some more details regarding the re-computation controller's internal logic and their relations are elaborated here. As shown by Figure 7, the re-computation controller 2 exemplarily includes the following components:

- Internal Data representation component 10: This component provides tools to build, store, update and access big matrixes representing the pre-computed search results stored in the database 4. The main function of Internal Data representation component 10 is to provide a "mirror" of the pre-computed search results stored in the database 4 serving as the basis for analyzing the pre-computed search results in order to decide which of them are to be re-computed in the next re-computation cycle. More precisely, the Internal Data representation component 10 does not hold a one-to-one copy of the pre-computed search results as stored in the database 4, but an appropriate representation which does not have to include every details of the pre-computed search results as stored in the database 4, but, on the other hand, includes additional control data associated with the pre-computed search results such as the times of their last re-computation and, in particular, the re-computation indicator.

- Input manager 11: This component inputs data from heterogeneous sources such as a validity rate database or data source, a popularity database or data source, an initial accuracy database or data source, a costs database or data source, and/or sources indicating real-time events potentially influencing the validity of the pre-computed search results. These data is e.g. used to generate and update the re-computation indicators associated with the pre-computed search results as explained in detail above. The input manager 11 converts the incoming data into the appropriate data formats and updates corresponding matrixes representing the pre-computed search results as stored by the Internal Data representation component 10.

- Analyzer 12: This component computes intermediate data matrixes implied by the probabilistic model (accuracy, criticality) on the basis of the matrices stored by the Internal Data representation component 10.

- Events manager 13: This component aggregates information on real-time events information and amends the validity predictions given by the probabilistic model accordingly.

- Optimizer 14: This component runs the re-computation strategy, i.e. the re-computation frequency oriented re-computation and the iterative selection of pre-computed search results taking into account varying computation costs of interrelated pre-computed search results as described in detail above. After having determined the pre-computed search results to be recomputed, the optimizer 14 generates re-computation orders and issues them to the computation platform 3. Furthermore, it updates the re-computation time of these pre-computed search results stored in the Internal Data representation component 10.

The latter two modules, the events manager 13 and the optimizer 14, are grouped under the name "consolidator" in PCT/EP2013/002390.

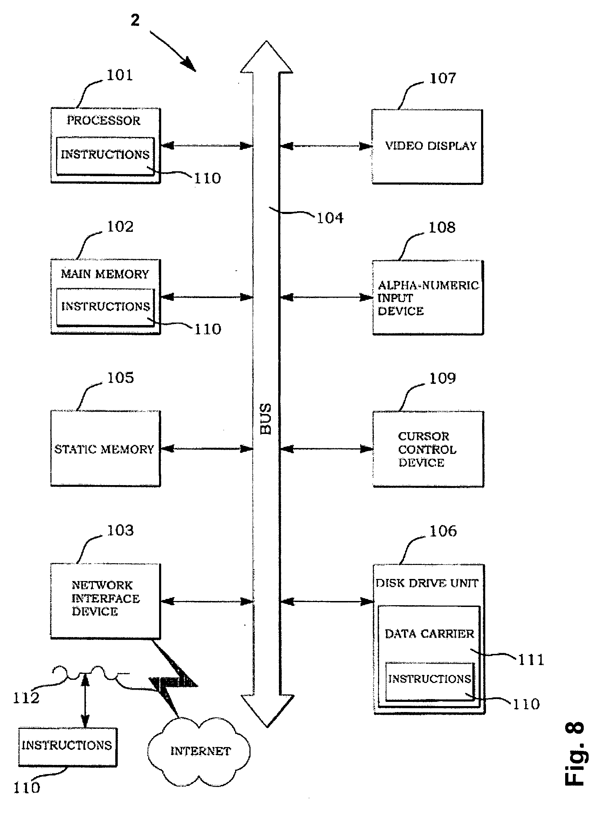

Finally, Fig. 8 is a diagrammatic representation of a computer system which provides the functionality of the re-computation controller 2 as shown by Figures 2, 6 and 7. Within the re-computation controller 2 a set of instructions, to cause the computer system to perform any of the methods discussed herein, may be executed. The re-computation controller 2 includes a processor 101, a main memory 102 and a network interface device 103, which communicate with each other via a bus 104. Optionally, it may further include a static memory 105 and a disk-drive unit 106. A video display 107, an alpha-numeric input device 108 and a cursor control device 109 may form a distribution list navigator user interface. The network interface device 103 connects the data re-computation controller 2 to the computation platform 3, the sources of statistical data needed to fill up the predictive model such as a statistics servers, a volatility database or data source and an initial accuracy database or data source, the sources of real-time events, the Internet and/or any other network. A set of instructions (i.e. software) 110 embodying any one, or all, of the methods described above, resides completely, or at least partially, in or on a machine-readable medium, e.g. the main memory 102 and/or the processor 101. A machine-readable medium on which the software 110 resides may also be a non-volatile data carrier 111 (e.g. a non-removable magnetic hard disk or an optical or magnetic removable disk) which is part of disk drive unit 106. The software 110 may further be transmitted or received as a propagated signal 112 via the Internet through the network interface device 103.

The present re-computation strategy provides a means to automatically generate re-computation decisions which are directed to improve the validity of pre-computed search results. It determines which pre-computed search results are to be re-computed and controls the re-computation also time-wise by taking into account the available computation resources at the computation platform. Thus, in general, the accuracy/validity of the pre-computed search results is estimated on the probabilistic model which models the up-to-dateness and out-of-dateness, respectively, over time, and takes into account a re-computation frequency of the pre-computed search results. Pre-computed search results which are re-computed more often than others are considered to be more "expensive" to keep up-to-date. In this way, an ineffective focus on constantly re-computing very volatile pre-computed search result is avoided.

### Claims

1. A method for re-computing pre-computed search results performed in a database environment (1), the database environment comprising a search platform (4) maintaining pre-computed search results, a re-computation controller (2) and a computation platform (3), the method comprising:

   - the re-computation controller (2) assigning a re-computation indicator to any of the pre-computed search results, wherein the re-computation indicator for a pre-computed search result i indicates a re-computation priority of the pre-computed search result i and is based on at least the following factors:

     o a probability $acc_i$ of the pre-computed search result i being still valid;
     o a re-computation frequency $f_i$ of the pre-computed search result i approximated by the reciprocal of a time since the last re-computation of the pre-computed search result i; and
     ○ a measure for computation resources $c_i$ needed to re-compute the pre-computed search result i;

   - wherein the re-computation indicator is defined by $\dfrac{1 - acc_i}{f_i c_i}$;

   - within a given time interval, re-computing pre-computed search results having a re-computation indicator indicating the highest priority for re-computation, the number of pre-computed search results re-computed by the computation platform being limited by the computation platform's computation resources available for the re-computation within the given time interval.

2. The method of claim 1, further comprising:

  - the re-computation controller (2) generating re-computation orders for the pre-computed search results having a re-computation indicator indicating the highest priority for re-computation, the number of pre-computed search results re-computed by the computation platform being limited by the computation platform's computation resources available for the re-computation;
  - the re-computation controller (2) transmitting the re-computation orders to the computation platform (3); and
  - the computation platform (3) re-computing the pre-computed search results indicated by the re-computation orders in response to the re-computation orders.

3. The method of claim 1 or claim 2 , wherein the re-computation indicator is further based on an access frequency $p_i$ of the pre-computed search result i from the search platform, wherein the re-computation indicator is defined by

$$p_i \frac{1 - acc_i}{f_i c_i}.$$

4. The method of any of the preceding claims, wherein the probability that the pre-computed search result i is still valid is defined by $e^{-\lambda_i t_i}$, $\lambda_i$ denoting a validity rate of the pre-computed search result i modeled by a probabilistic model and $t_i$ denoting the time since the last re-computation of the pre-computed search result i.

5. The method of any of the preceding claims, wherein the re-computation indicator is additionally based on an initial accuracy value indicating the expected accuracy of the pre-computed search result i at the time of its re-computation.

6. The method of any of the preceding claims, wherein the computation resources to re-compute pre-computed search result i depend on whether or not other pre-computed search results related to the pre-computed search result i are re-computed during the given time interval and wherein the computation resources needed to re-compute pre-computed search result i are dynamically estimated depending on which other pre-computed search results related to the pre-computed search result i are selected for re-computation during the given time interval.

7. The method of any of the preceding claims, the method further comprising

  - iteratively selecting the pre-computed search results for re-computation by the computation platform (3) within the given time interval including estimating the re-computation resources to re-compute the pre-computed search results, comprising:

    a) initializing the computation resources $c_i$ needed to re-compute each pre-computed search result i with a value assuming computation of i independent from the computation of other pre-computed search results selected for re-computation during the given time interval;
    b) selecting a not-yet-selected portion of the pre-computed search results for re-computation in accordance with the re-computation indicator, wherein - based on the current values for the computation resources needed to re-compute the portion of pre-computed search results - the selected portion only requiring a given percentage of the computation platform's overall computation resources available for re-computation within the given time interval;
    c) re-assessing the computation resources $c_i$ needed to re-compute each pre-computed search result i by taking into account which pre-computed search results related to the pre-computed search result i have been selected for re-computation;
    d) proceeding with step b) if less than 100% of the computation platform's overall computation resources available for re-computation within the given time interval is exhausted.

8. A re-computation controller (2) for employment in a database environment (1), the database environment comprising a search platform (4) maintaining pre-computed search results and a computation platform (3), the re-computation controller (2) being arranged to:

  - assign a re-computation indicator to any of the pre-computed search results, wherein the re-computation indicator for a pre-computed search result i indicates a re-computation priority of the pre-computed search result i and is based on at least the following factors:

∘ a probability $acc_i$ that the pre-computed search result i is still valid;
∘ a re-computation frequency $f_i$ of the pre-computed search result i approximated by the reciprocal of a time since the last re-computation of the pre-computed search result i; and
∘ a measure for computation resources $c_i$ needed to re-compute the pre-computed search result i;

wherein the re-computation indicator is defined by $\dfrac{1 - acc_i}{f_i c_i}$ ;

- generate re-computation orders for pre-computed search results having a re-computation indicator indicating the highest priority for re-computation, the number of pre-computed search results re-computed by the computation platform (3) being limited by the computation platform's computation resources available for the re-computation;
- transmit the re-computation orders to the computation platform (3) in order to make the computation platform (3) re-compute the pre-computed search results indicated by the re-computation orders.

9. The re-computation controller of claim 8, wherein the re-computation indicator is further based on an access frequency $p_i$ of the pre-computed search result i from the search platform, wherein the re-computation indicator is defined by

$$p_i \frac{1 - acc_i}{f_i c_i} \ .$$

10. The re-computation controller of claim 8 or claim 9, wherein the probability that the pre-computed search result i is still valid is defined by $e^{-\lambda_i t_i}$, $\lambda_i$ denoting a validity rate of the pre-computed search result i modeled by a probabilistic model and ti denoting the time since the last re-computation of the pre-computed search result i.

11. The re-computation controller of any of claims 8 to 10, wherein the computation resources needed to re-compute pre-computed search result i depend on whether or not other pre-computed search results related to the pre-computed search result i are re-computed during the given time interval, the re-computation controller (2) being further arranged to iteratively select the pre-computed search results for re-computation by the computation platform (3) within the given time interval, the selection including an estimation of the re-computation resources to re-compute the pre-computed search results by:

a) initializing the computation resources $c_i$ needed to re-compute each pre-computed search result i with a value assuming computation of i independent from the computation of other pre-computed search results selected for re-computation during the given time interval;
b) selecting a not-yet-selected portion of the pre-computed search results for re-computation in accordance with the re-computation indicator, wherein - based on the current values for the computation resources needed to re-compute the portion of pre-computed search results - the selected portion only requiring a given percentage of the computation platform's overall computation resources available for re-computation within the given time interval;
c) re-assessing the computation resources $c_i$ needed to re-compute each pre-computed search result i by taking into account which pre-computed search results related to the pre-computed search result i have been selected for re-computation;
d) proceeding with step b) if less than 100% of the computation platform's overall computation resources available for re-computation within the given time interval is exhausted.

12. Non-transitory computer readable storage medium having computer program instructions stored therein, which when executed on a computer system cause the computer system to:

- assign a re-computation indicator to any of a plurality of pre-computed search results, wherein the re-computation indicator for a pre-computed search result i indicates a re-computation priority of the pre-computed search result i and is based on at least the following factors;

∘ a probability $acc_i$ that the pre-computed search result i is outdated; and
∘ a re-computation frequency $f_i$ of the pre-computed search result i approximated by the reciprocal of a time since the last re-computation of the pre-computed search result i; and
∘ a measure for computation resources $c_i$ needed to re-compute the pre-computed search result i;

wherein the re-computation indicator is defined by $\dfrac{1 - acc_i}{f_i c_i}$ ;

- generate re-computation orders for these pre-computed search results having a re-computation indicator indicating the highest priority for re-computation, the number of pre-computed search results re-computed by a computation platform (3) being limited by the computation platform's computation resources available for the re-computation;
- transmit the re-computation orders to the computation platform (3) in order to make the computation platform (3) re-compute the pre-computed search results indicated by the re-computation orders.

13. The computer readable storage medium of claim 12, wherein the re-computation indicator is further based on an access frequency pi of the pre-computed search result i from the search platform, wherein the re-computation indicator is defined by $p_i \dfrac{1 - acc_i}{f_i c_i}$ .

14. The computer readable storage medium of claim 12 or claim 13, wherein the probability that the pre-computed search result i is still valid is defined by $e^{-\lambda_i t_i}$, $\lambda_i$ denoting a validity rate of the pre-computed search result i modeled by a probabilistic model and ti denoting the time since the last re-computation of the pre-computed search result i.

15. The computer readable storage medium of any of claims 12 to 14, wherein the computation resources needed to re-compute pre-computed search result i depend on whether or not other pre-computed search results related to the pre-computed search result i are re-computed during the given time interval, wherein the computer program instructions cause the computer system to iteratively select the pre-computed search results for re-computation by the computation platform (3) within the given time interval, the selection including an estimation of the re-computation resources to re-compute the pre-computed search results by:

a) initializing the computation resources $c_i$ needed to re-compute pre-computed search result i with a value assuming computation of i independent from the computation of other pre-computed search results selected for re-computation during the given time interval;
b) selecting a not-yet-selected portion of the pre-computed search results for re-computation in accordance with the re-computation indicator, wherein - based on the current values for the computation resources needed to re-compute the portion of pre-computed search results - the selected portion only requiring a given percentage of the computation platform's overall computation resources available for re-computation within the given time;
c) re-assessing the computation resources $c_i$ needed to re-compute pre-computed search result i by taking into account which pre-computed search results related to the pre-computed search result i have been selected for re-computation;
d) proceeding with step b) if less than 100% of the computation platform's overall computation resources available for re-computation within the given time is exhausted.

**Patentansprüche**

1. Verfahren zur Neuberechnung vorberechneter Suchergebnisse innerhalb einer Datenbank-Umgebung (1), die Datenbank-Umgebung umfassend eine Suchplattform (4), die vorberechnete Suchergebnisse hält, einen Neuberechnungs-Controller (2) und eine Berechnungs-Plattform (3), das Verfahren umfassend:

- der Neuberechnungs-Controller (2) weist jedem der vorberechneten Suchergebnisse einen Neuberechnungs-Indikator zu, wobei der Neuberechnungs-Indikator für ein vorberechnetes Suchergebnis i eine Neuberechnungs-Priorität des vorberechneten Suchergebnisses i angibt und auf mindestens den folgenden Faktoren basiert:

o einer Wahrscheinlichkeit $acc_i$, dass das vorberechnete Suchergebnis i noch gültig ist;
○ einer Neuberechnungs-Frequenz $f_i$ des vorberechneten Suchergebnisses i, abgeschätzt durch den Kehrwert der Zeit seit der letzten Neuberechnung des vorberechneten Suchergebnisses i; und
○ einer Messung der Berechnungs-Ressourcen $c_i$, die zum Neuberechnen des vorberechneten Suchergebnisses i benötigt werden;

EP 2 911 070 B1

- wobei der Neuberechnungs-Indikator definiert ist durch $\dfrac{1-acc_i}{f_i c_i}$ ;

- innerhalb eines gegebenen Zeitintervalls, Neuberechnen von vorberechneten Suchergebnissen, die einen Neuberechnungs-Indikator haben, der die höchste Priorität für die Neuberechnung angibt, wobei die Anzahl der vorberechneten Suchergebnisse, die durch die Berechnungsplattform neuberechnet werden, durch die Berechnungs-Ressourcen der Berechnungs-Plattform begrenzt werden, welche für die Neuberechnung innerhalb des gegebenen Zeitintervalls verfügbar sind.

2. Verfahren gemäß Anspruch 1, weiterhin umfassend:

- der Neuberechnungs-Controller (2) erzeugt Neuberechnungs-Anweisungen für die vorberechneten Suchergebnisse, die einen Neuberechnungs-Indikator haben, der die höchste Priorität zur Neuberechnung angibt, wobei die Anzahl der vorberechneten Suchergebnisse, die durch die Berechnungsplattform neuberechnet werden, durch die für die Neuberechnung verfügbaren Berechnungs-Ressourcen der Berechnungs-Plattform begrenzt ist;
- der Neuberechnungs-Controller (2) überträgt die Neuberechnungs-Anweisungen an die Berechnungs-Plattform (3); und
- die Berechnungs-Plattform (3) berechnet in Erwiderung der Neuberechnungs-Anweisungen die vorberechneten Suchergebnisse neu, die durch die Neuberechnungs-Anweisungen angegeben werden.

3. Verfahren gemäß Anspruch 1 oder Anspruch 2,
wobei der Neuberechnungs-Indikator weiterhin auf einer Zugriffs-Frequenz $p_i$ des vorberechneten Suchergebnisses

i von der Suchplattform basiert, wobei der Neuberechnungs-Indikator durch $p_i \dfrac{1-acc_i}{f_i c_i}$ definiert ist.

4. Verfahren gemäß einem der vorherigen Ansprüche, wobei die Wahrscheinlichkeit, dass das vorberechnete Suchergebnis i noch gültig ist, durch $e^{-\lambda_i t_i}$, definiert ist, wobei $\lambda_i$ eine Gültigkeitsrate für das vorberechnete Suchergebnis i bezeichnet, das durch ein Wahrscheinlichkeitsmodell modelliert wird und ti die Zeit seit der letzten Neuberechnung des vorberechneten Suchergebnisses i bezeichnet.

5. Verfahren gemäß einem der vorherigen Ansprüche, wobei der Neuberechnungs-Indikator zusätzlich auf einem anfänglichen Genauigkeitswert basiert, der die erwartete Genauigkeit des vorberechneten Suchergebnisses i zur Zeit seiner Neuberechnung angibt.

6. Verfahren gemäß einem der vorherigen Ansprüche, wobei die Berechnungs-Ressourcen zur Neuberechnung des vorberechneten Suchergebnisses i davon abhängig sind, ob oder ob nicht andere vorberechnete Suchergebnisse mit Bezug zu dem vorberechneten Suchergebnis i während des gegebenen Zeitintervalls neuberechnet werden, und wobei die Berechnungs-Ressourcen, die für die Neuberechnung des vorberechnete Suchergebnisses i benötigt werden, dynamisch geschätzt werden, abhängig davon, welche anderen, vorberechneten Suchergebnisse mit Bezug zu dem vorberechneten Suchergebnis i zur Neuberechnung während des gegebenen Zeitintervalls ausgewählt werden.

7. Verfahren gemäß einem der vorherigen Ansprüche, weiterhin umfassend

- iteratives Auswählen der vorberechneten Suchergebnisse zur Neuberechnung durch die Berechnungs-Plattform (3) innerhalb des gegebenen Zeitintervalls, einschließlich eines Abschätzens der Neuberechnungs-Ressourcen zum Neuberechnen der vorberechneten Suchergebnisse, umfassend:

a) Initialisieren der Berechnungs-Ressourcen $c_i$, die zur Neuberechnung jedes vorberechneten Suchergebnisses i benötigt werden, mit einem Wert, der annimmt, dass die Berechnung von i unabhängig von der Berechnung anderer vorberechneter Suchergebnisse ist, die zur Neuberechnung während des gegebenen Zeitintervalls ausgewählt wurden;
b) Auswählen einer noch nicht ausgewählten Menge der vorberechneten Suchergebnisse zur Neuberechnung gemäß dem Neuberechnungs-Indikator, wobei - basierend auf den momentanen Werten für die Berechnungs-Ressourcen, die für Neuberechnung der Menge der vorberechneten Suchergebnisse benötigt werden - die ausgewählte Menge nur einen gegebenen Anteil der gesamten Berechnungs-Ressourcen der Berechnungs-Plattform benötigt, die innerhalb des gegebenen Zeitintervalls für die Neuberechnung verfügbar sind;

c) Neubemessen der Berechnungs-Ressourcen $c_i$, die für die Neuberechnung jedes vorberechneten Suchergebnisses i benötigt werden, unter Berücksichtigung welche vorberechneten Suchergebnisse mit Bezug auf das vorberechnete Suchergebnis i für die Neuberechnung ausgewählt wurden;

d) Fortfahren mit Schritt b), wenn weniger als 100% der gesamten Berechnungs-Ressourcen der Berechnungs-Plattform für die Neuberechnung innerhalb des gegebenen Zeitintervalls aufgebraucht sind.

8. Neuberechnungs-Controller (2) zur Verwendung in einer Datenbank-Umgebung (1), die Datenbank-Umgebung umfassend eine Suchplattform (4), die vorberechnete Suchergebnisse hält und eine Berechnungs-Plattform (3), der Neuberechnungs-Controller (2) ist ausgelegt zum:

- Zuweisen eines Neuberechnungs-Indikators zu jedem der vorberechneten Suchergebnisse, wobei der Neuberechnungs-Indikator für ein vorberechnetes Suchergebnis i, eine Neuberechnungs-Priorität des vorberechneten Suchergebnisses i angibt und auf mindestens den folgenden Faktoren basiert:

o einer Wahrscheinlichkeit $acc_i$, dass das vorberechneten Suchergebnis i noch gültig ist;

∘ einer Neuberechnungs-Frequenz $f_i$ des vorberechneten Suchergebnisses i, abgeschätzt durch den Kehrwert der Zeit seit der letzten Neuberechnung des vorberechneten Suchergebnisses i; und

∘ einer Messung der Berechnungs-Ressourcen $c_i$, die zum Neuberechnen des vorberechneten Suchergebnisses i benötigt werden;

wobei der Neuberechnungs-Indikator definiert ist durch $\dfrac{1 - acc_i}{f_i c_i}$;

- Generieren von Neuberechnungs-Anweisungen für vorberechnete Suchergebnisse, die einen Neuberechnungs-Indikator haben, der die höchste Priorität zur Neuberechnung angibt, wobei die Anzahl der vorberechneten Suchergebnisse, die durch die Berechnungsplattform (3) neuberechnet werden, durch die für die Neuberechnung verfügbaren Berechnungs-Ressourcen der Berechnungs-Plattform begrenzt werden;

- Übertragen der Neuberechnungs-Anweisungen an die Berechnungs-Plattform (3), um die Berechnungs-Plattform (3) zur Neuberechnung der vorberechneten Suchergebnisse zu veranlassen, die durch die Neuberechnungs-Anweisungen angegeben werden.

9. Neuberechnungs-Controller gemäß Anspruch 8, wobei der Neuberechnungs-Indikator weiterhin auf einer Zugriffs-Frequenz pi des vorberechneten Suchergebnisses i von der Suchplattform basiert, wobei der Neuberechnungs-Indikator durch $p_i \dfrac{1 - acc_i}{f_i c_i}$ definiert ist.

10. Neuberechnungs-Controller gemäß Anspruch 8 oder Anspruch 9, wobei die Wahrscheinlichkeit, dass das vorberechnete Suchergebnis i noch gültig ist, durch $e^{-\lambda_i t_i}$, definiert ist, wobei $\lambda_i$ eine Gültigkeitsrate für das vorberechnete Suchergebnis i bezeichnet, das durch ein Wahrscheinlichkeitsmodell modelliert wird und $t_i$ die Zeit seit der letzten Neuberechnung des vorberechneten Suchergebnisses i bezeichnet.

11. Neuberechnungs-Controller gemäß Anspruch 8 bis Anspruch 10, wobei die Berechnungs-Ressourcen, die für die Neuberechnung des vorberechneten Suchergebnisses i benötigt werden, davon abhängig sind, ob oder ob nicht andere vorberechnete Suchergebnisse mit Bezug zu dem vorberechneten Suchergebnis i während des gegebenen Zeitintervalls neuberechnet werden, wobei der Neuberechnungs-Controller (2) weiterhin dazu ausgelegt ist, die vorberechneten Suchergebnisse zur Neuberechnung durch die Neuberechnungs-Plattform (3) innerhalb des gegebenen Zeitintervalls iterativ auszuwählen, wobei die Auswahl eine Abschätzung der Neuberechnungs-Ressourcen zum Neuberechnen der vorberechneten Suchergebnisse beinhaltet durch:

a) Initialisieren der Berechnungs-Ressourcen $c_i$, die zur Neuberechnung jedes vorberechneten Suchergebnisses i benötigt werden, mit einem Wert, der annimmt, dass die Berechnung von i unabhängig, von der Berechnung anderer vorberechneter Suchergebnisse ist, die zur Neuberechnung während des gegebenen Zeitintervalls ausgewählt wurden;

b) Auswählen einer noch nicht ausgewählten Menge der vorberechneten Suchergebnisse zur Neuberechnung in gemäß dem Neuberechnungs-Indikator, wobei - basierend auf den momentanen Werten für die Berechnungs-Ressourcen, die für Neuberechnung der Menge der vorberechneten Suchergebnisse benötigt werden - die ausgewählte Menge nur einen gegebenen Anteil der gesamten Berechnungs-Ressourcen der Berechnungs-Plattform benötigt, die innerhalb des gegebenen Zeitintervalls für die Neuberechnung verfügbar sind;

c) Neubemessen der Berechnungs-Ressourcen $c_i$, die für die Neuberechnung jedes vorberechneten Suchergebnisses i benötigt werden, unter Berücksichtigung welche vorberechneten Suchergebnisse mit Bezug auf das vorberechneten Suchergebnis i für die Neuberechnung ausgewählt wurden;

d) Fortfahren mit Schritt b), wenn weniger als 100% der gesamten Berechnungs-Ressourcen der Berechnungs-Plattform für die Neuberechnung innerhalb des gegebenen Zeitintervalls aufgebraucht sind.

12. Computer-lesbares Speichermedium zur dauerhaften Speicherung mit darauf gespeicherte Computerprogramm-Anweisungen, die bei Ausführung ein Computersystem veranlassen zum:

- Zuweisen eines Neuberechnungs-Indikators zu jedem der vorberechneten Suchergebnisse, wobei der Neuberechnungs-Indikator für ein vorberechnetes Suchergebnis i eine Neuberechnungs-Priorität des vorberechneten Suchergebnisses i angibt und auf mindestens den folgenden Faktoren basiert:

  ◦ einer Wahrscheinlichkeit $acc_i$, dass das vorberechneten Suchergebnis i veraltet ist; und
  ◦ einer Neuberechnungs-Frequenz $f_i$ des vorberechneten Suchergebnisses i, abgeschätzt durch den Kehrwert der Zeit seit der letzten Neuberechnung des vorberechneten Suchergebnisses i; und
  ◦ einer Messung der Berechnungs-Ressourcen $c_i$ die zum Neuberechnen des vorberechneten Suchergebnisses benötigt werden;

wobei der Neuberechnungs-Indikator definiert ist durch $\dfrac{1 - acc_i}{f_i c_i}$;

- Generieren von Neuberechnungs-Anweisungen für vorberechnete Suchergebnisse, die einen Neuberechnungs-Indikator haben, der die höchste Priorität zur Neuberechnung angibt, wobei die Anzahl der vorberechneten Suchergebnisse, die durch die Berechnungsplattform (3) neuberechnet werden, durch die für die Neuberechnung verfügbaren Berechnungs-Ressourcen der Berechnungs-Plattform begrenzt werden;

- Übertragen der Neuberechnungs-Anweisungen an die Berechnungs-Plattform (3), um die Berechnungs-Plattform (3) zur Neuberechnung der vorberechneten Suchergebnisse zu veranlassen, die durch die Neuberechnungs-Anweisungen angegeben werden.

13. Computer-lesbares Speichermedium gemäß Anspruch 12, wobei der Neuberechnungs-Indikator weiterhin auf einer Zugriffs-Frequenz $p_i$ des vorberechneten Suchergebnisse i von der Suchplattform basiert, wobei der Neuberechnungs-Indikator durch $p_i \dfrac{1 - acc_i}{f_i c_i}$ definiert ist.

14. Computer-lesbares Speichermedium gemäß Anspruch 12 oder Anspruch 13, wobei die Wahrscheinlichkeit, dass das vorberechnete Suchergebnis i noch gültig ist, durch $e^{-\lambda_i t_i}$, definiert ist, wobei $\lambda_i$ eine Gültigkeitsrate für das vorberechnete Suchergebnis i bezeichnet, das durch ein Wahrscheinlichkeitsmodell modelliert wird und $t_i$ die Zeit seit der letzten Neuberechnung des vorberechneten Suchergebnisses i bezeichnet.

15. Computer-lesbares Speichermedium gemäß Anspruch 12 bis Anspruch 14, wobei die Berechnungs-Ressourcen, die für die Neuberechnung des vorberechneten Suchergebnisses i benötigt werden, davon abhängig sind, ob oder ob nicht andere vorberechnete Suchergebnisse mit Bezug zu dem vorberechneten Suchergebnis i während des gegebenen Zeitintervalls neuberechnet werden, und wobei die Computerprogramm-Anweisungen den Computer dazu veranlassen, iterativ die vorberechneten Suchergebnisse zur Neuberechnung durch die Neuberechnungs-Plattform (3) innerhalb des gegebenen Zeitintervalls auszuwählen, wobei die Auswahl eine Abschätzung der Neuberechnungs-Ressourcen zum Neuberechnen der vorberechneten Suchergebnisse beinhaltet durch:

a) Initialisieren der Berechnungs-Ressourcen $c_i$, die zur Neuberechnung jedes vorberechneten Suchergebnisses i, benötigt werden, mit einem Wert, der annimmt, dass die Berechnung von i unabhängig von der Berechnung anderer vorberechneter Suchergebnisse ist, die zur Neuberechnung während des gegebenen Zeitintervalls ausgewählt wurden;

b) Auswählen einer noch nicht ausgewählten Menge der vorberechneten Suchergebnisse zur Neuberechnung gemäß dem Neuberechnungs-Indikator, wobei - basierend auf den momentanen Werten für die Berechnungs-Ressourcen, die für Neuberechnung der Menge der vorberechneten Suchergebnisse benötigt werden - die ausgewählte Menge nur einen gegebenen Anteil der gesamten Berechnungs-Ressourcen der Berechnungs-Plattform benötigt, die innerhalb des gegebenen Zeitintervalls für die Neuberechnung verfügbar sind;

c) Neubemessen der Berechnungs-Ressourcen $c_i$, die für die Neuberechnung jedes vorberechneten Suchergebnisses i benötigt werden, unter Berücksichtigung welche vorberechneten Suchergebnisse, mit Bezug auf das vorberechnete Suchergebnis i für die Neuberechnung ausgewählt wurden;

d) Fortfahren mit Schritt b), wenn weniger als 100% der gesamten Berechnungs-Ressourcen der Berechnungs-Plattform für die Neuberechnung innerhalb des gegebenen Zeitintervalls aufgebraucht sind.

## Revendications

1.  Procédé pour recalculer des résultats de recherche pré-calculés effectué dans un environnement de base de données (1), l'environnement de base de données comprenant une plateforme de recherche (4) maintenant des résultats de recherche pré-calculés, un contrôleur de recalcul (2) et une plateforme de calcul (3), le procédé comprenant :

    - l'attribution, par le contrôleur de recalcul (2), d'un indicateur de recalcul à l'un quelconque des résultats de recherche pré-calculés, dans lequel l'indicateur de recalcul pour un résultat de recherche pré-calculé i indique une priorité de recalcul du résultat de recherche pré-calculé i et est basé au moins sur les facteurs suivantes :

        . une probabilité $acc_i$ que le résultat de recherche pré-calculé i soit encore valide ;
        . une fréquence de recalcul $f_i$ du résultat de recherche pré-calculé i approchée par la réciproque d'un temps depuis le dernier recalcul du résultat de recherche pré-calculé i ; et
        . une mesure des ressources de calcul $c_i$ nécessaires pour recalculer le résultat de recherche pré-calculé i ;

    dans lequel l'indicateur de recalcul est défini par $\dfrac{1 - acc_i}{f_i c_i}$ ;

    - dans les limites d'un intervalle de temps donné, le recalcul des résultats de recherche pré-calculés ayant un indicateur de recalcul indiquant la priorité la plus élevée pour le recalcul, le nombre de résultats de recherche pré-calculés recalculés par la plateforme de calcul étant limités par les ressources de calcul de la plateforme de calcul disponibles pour le recalcul dans les limites de l'intervalle de temps donné.

2.  Procédé selon la revendication 1, comprenant en outre :

    - la génération, par le contrôleur de recalcul (2), d'ordres de recalcul pour les résultats de recherche pré-calculés ayant un indicateur de recalcul indiquant la priorité la plus élevée pour le recalcul, le nombre de résultats de recherche pré-calculés recalculés par la plateforme de calcul étant limité par les ressources de calcul de la plateforme de calcul disponibles pour le recalcul ;
    - la transmission, par le contrôleur de recalcul (2), des ordres de recalcul à la plateforme de calcul (3) ; et
    - le recalcul, par la plateforme de calcul (3), des résultats de recherche pré-calculés indiqués par les ordres de recalcul en réponse aux ordres de recalcul.

3.  Procédé selon la revendication 1 ou la revendication 2, dans lequel l'indicateur de recalcul est en outre basé sur une fréquence d'accès $p_i$ du résultat de recherche pré-calculé i à partir de la plateforme de recherche, dans lequel l'indicateur de recalcul est défini par $p_i \dfrac{1 - acc_i}{f_i c_i}$ .

4.  Procédé selon l'une quelconque des revendications précédentes, dans lequel la probabilité que le résultat de recherche pré-calculé i soit encore valide est définie par $e^{-\lambda_i t_i}$, $\lambda_i$ indiquant un taux de validité du résultat de recherche pré-calculé i modélisé par un modèle probabiliste et ti indiquant le temps depuis le dernier recalcul du résultat de recherche pré-calculé i.

5. Procédé selon l'une quelconque des revendications précédentes, dans lequel l'indicateur de recalcul est en plus basé sur une valeur de précision initiale indiquant la précision attendue du résultat de recherche pré-calculé i à l'instant de son recalcul.

6. Procédé selon l'une quelconque des revendications précédentes, dans lequel les ressources de calcul pour recalculer le résultat de recherche pré-calculé i dépendent du fait que d'autres résultats de recherche pré-calculés en rapport avec le résultat de recherche pré-calculé i sont ou non recalculés pendant l'intervalle de temps donné, et dans lequel les ressources de calcul nécessaires pour recalculer le résultat de recherche pré-calculé i sont estimées dynamiquement en fonction des autres résultats de recherche pré-calculés en rapport avec le résultat de recherche pré-calculé i qui sont sélectionnés pour le recalcul pendant l'intervalle de temps donné.

7. Procédé selon l'une quelconque des revendications précédentes, le procédé comprenant en outre :

- la sélection de manière itérative des résultats de recherche pré-calculés pour le recalcul par la plateforme de calcul (3) dans les limites de l'intervalle de temps donné comprenant l'estimation des ressources de recalcul pour recalculer les résultats de recherche pré-calculés, comprenant :

a) l'initialisation des ressources de calcul $c_i$ nécessaires pour recalculer chaque résultat de recherche pré-calculé i avec une valeur supposant que le calcul de i est indépendant du calcul des autres résultats de recherche pré-calculés sélectionnés pour le recalcul pendant l'intervalle de temps donné ;
b) la sélection d'une partie pas encore sélectionnée des résultats de recherche pré-calculés pour le recalcul conformément à l'indicateur de recalcul, dans lequel - sur la base des valeurs actuelles pour les ressources de calcul nécessaires pour recalculer la partie des résultats de recherche pré-calculés - la partie sélectionnée ne nécessitant qu'un pourcentage donné des ressources de calcul globales de la plateforme de calcul disponibles pour le recalcul dans les limites de l'intervalle de temps donné ;
c) la réévaluation des ressources de calcul $c_i$ nécessaires pour recalculer chaque résultat de recherche pré-calculé i en prenant en compte les résultats de recherche pré-calculés en rapport avec le résultat de recherche pré-calculé i qui ont été sélectionnés pour le recalcul ;
d) la poursuite avec l'étape b) si moins de 100 % des ressources de calcul globales de la plateforme de calcul disponibles pour le recalcul dans les limites de l'intervalle de temps donné sont épuisées.

8. Contrôleur de recalcul (2) destiné à être utilisé dans un environnement de base de données (1), l'environnement de base de données comprenant une plateforme de recherche (4) maintenant des résultats de recherche pré-calculés et une plateforme de calcul (3), le contrôleur de recalcul (2) étant agencé pour:

- attribuer un indicateur de recalcul à l'un quelconque des résultats de recherche pré-calculés, dans lequel l'indicateur de recalcul pour un résultat de recherche pré-calculé i indique une priorité de recalcul du résultat de recherche pré-calculé i et est basé au moins sur les facteurs suivants:

. une probabilité $acc_i$ que le résultat de recherche pré-calculé i soit encore valide ;
. une fréquence de recalcul fi du résultat de recherche pré-calculé i approchée par la réciproque d'un temps depuis le dernier recalcul du résultat de recherche pré-calculé i ; et
. une mesure des ressources de calcul $c_i$ nécessaires pour recalculer le résultat de recherche pré-calculé i ;

dans lequel l'indicateur de recalcul est défini par $\dfrac{1 - acc_i}{f_i c_i}$ ;

- générer des ordres de recalcul pour les résultats de recherche pré-calculés ayant un indicateur de recalcul indiquant la priorité la plus élevée pour le recalcul, le nombre de résultats de recherche pré-calculés recalculés par la plateforme de calcul (3) étant limité par les ressources de calcul de la plateforme de calcul disponibles pour le recalcul ;
- transmettre les ordres de recalcul à la plateforme de calcul (3) afin d'amener la plateforme de calcul (3) à recalculer les résultats de recherche pré-calculés indiqués par les ordres de recalcul.

9. Contrôleur de recalcul selon la revendication 8, dans lequel l'indicateur de recalcul est en outre basé sur une

fréquence d'accès $p_i$ du résultat de recherche pré-calculé i à partir de la plateforme de recherche, dans lequel l'indicateur de recalcul est défini par $p_i \dfrac{1 - acc_i}{f_i c_i}$ .

10. Contrôleur de recalcul selon la revendication 8 ou la revendication 9, dans lequel la probabilité que le résultat de recherche pré-calculé i soit encore valide est définie par $e^{-\lambda_i \tau_i}$, $\lambda_i$ indiquant un taux de validité du résultat de recherche pré-calculé i modélisé par un modèle probabiliste et ti indiquant le temps depuis le dernier recalcul du résultat de recherche pré-calculé i.

11. Contrôleur de recalcul selon l'une quelconque des revendications 8 à 10, dans lequel les ressources de calcul nécessaires pour recalculer le résultat de recherche pré-calculé i dépendent du fait que d'autres résultats de recherche pré-calculés en rapport avec le résultat de recherche pré-calculé i sont ou non recalculés pendant l'intervalle de temps donné, le contrôleur de recalcul (2) étant en outre agencé pour sélectionner de manière itérative les résultats de recherche pré-calculés pour le recalcul par la plateforme de calcul (3) dans les limites de l'intervalle de temps donné, la sélection comprenant une estimation des ressources de recalcul pour recalculer les résultats de recherche pré-calculés en :

a) initialisant les ressources de calcul $c_i$ nécessaires pour recalculer chaque résultat de recherche pré-calculé i avec une valeur supposant que le calcul de i est indépendant du calcul des autres résultats de recherche pré-calculés sélectionnés pour le recalcul pendant l'intervalle de temps donné ;
b) sélectionnant une partie pas encore sélectionnée des résultats de recherche pré-calculés pour le recalcul conformément à l'indicateur de recalcul, dans lequel - sur la base des valeurs actuelles pour les ressources de calcul nécessaires pour recalculer la partie des résultats de recherche pré-calculés - la partie sélectionnée ne nécessitant qu'un pourcentage donné des ressources de calcul globales de la plateforme de calcul disponibles pour le recalcul dans les limites de l'intervalle de temps donné ;
c) réévaluant les ressources de calcul $c_i$ nécessaires pour recalculer chaque résultat de recherche pré-calculé i en prenant en compte les résultats de recherche pré-calculés en rapport avec le résultat de recherche pré-calculé i qui ont été sélectionnés pour le recalcul ;
d) poursuivant avec l'étape b) si moins de 100 % des ressources de calcul globales de la plateforme de calcul disponibles pour le recalcul dans les limites de l'intervalle de temps donné sont épuisées.

12. Support de mémorisation pouvant être lu par un ordinateur non transitoire dans lequel des instructions de programme d'ordinateur sont mémorisées, qui, lorsqu'elles sont exécutées sur un système d'ordinateur amènent le système d'ordinateur à:

- attribuer un indicateur de recalcul à l'un quelconque d'une pluralité de résultats de recherche pré-calculés, dans lequel l'indicateur de recalcul pour un résultat de recherche pré-calculé i indique une priorité de recalcul du résultat de recherche pré-calculé i et est basé au moins sur les facteurs suivants:

. une probabilité $acc_i$ que le résultat de recherche pré-calculé i ne soit plus valide ;
. une fréquence de recalcul fi du résultat de recherche pré-calculé i approchée par la réciproque d'un temps depuis le dernier recalcul du résultat de recherche pré-calculé i ; et
. une mesure des ressources de calcul $c_i$ nécessaires pour recalculer le résultat de recherche pré-calculé i ;

dans lequel l'indicateur de recalcul est défini par $\dfrac{1 - acc_i}{f_i c_i}$ ;

- générer des ordres de recalcul pour les résultats de recherche pré-calculés ayant un indicateur de recalcul indiquant la priorité la plus élevée pour le recalcul, le nombre de résultats de recherche pré-calculés recalculés par une plateforme de calcul (3) étant limité par les ressources de calcul de la plateforme de calcul disponibles pour le recalcul ;
- transmettre les ordres de recalcul à la plateforme de calcul (3) afin d'amener la plateforme de calcul (3) à recalculer les résultats de recherche pré-calculés indiqués par les ordres de recalcul.

13. Support de mémorisation pouvant être lu par un ordinateur selon la revendication 12, dans lequel l'indicateur de recalcul est en outre basé sur une fréquence d'accès $p_i$ du résultat de recherche pré-calculé i à partir de la plateforme de recherche, dans lequel l'indicateur de recalcul est défini par $p_i \dfrac{1 - acc_i}{f_i c_i}$.

14. Support de mémorisation pouvant être lu par un ordinateur selon la revendication 12 ou la revendication 13, dans lequel la probabilité que le résultat de recherche pré-calculé i soit encore valide est définie par $e^{-\lambda_i t_i}$, $\lambda_i$ indiquant un taux de validité du résultat de recherche pré-calculé i modélisé par un modèle probabiliste et ti indiquant le temps depuis le dernier recalcul du résultat de recherche pré-calculé i.

15. Support de mémorisation pouvant être lu par un ordinateur selon l'une quelconque des revendications 12 à 14, dans lequel les ressources de calcul nécessaires pour recalculer le résultat de recherche pré-calculé i dépendent du fait que d'autres résultats de recherche pré-calculés en rapport avec le résultat de recherche pré-calculé i sont ou non recalculés pendant l'intervalle de temps donné, dans lequel les instructions de programme d'ordinateur amènent le système d'ordinateur à sélectionner de manière itérative les résultats de recherche pré-calculés pour le recalcul par la plateforme de calcul (3) dans les limites de l'intervalle de temps donné, la sélection comprenant une estimation des ressources de recalcul pour recalculer les résultats de recherche pré-calculés en :

a) initialisant les ressources de calcul $c_i$ nécessaires pour recalculer le résultat de recherche pré-calculé i avec une valeur supposant que le calcul de i est indépendant du calcul des autres résultats de recherche pré-calculés sélectionnés pour le recalcul pendant l'intervalle de temps donné ;
b) sélectionnant une partie pas encore sélectionnée des résultats de recherche pré-calculés pour le recalcul conformément à l'indicateur de recalcul, dans lequel - sur la base des valeurs actuelles pour les ressources de calcul nécessaires pour recalculer la partie des résultats de recherche pré-calculés - la partie sélectionnée ne nécessitant qu'un pourcentage donné des ressources de calcul globales de la plateforme de calcul disponibles pour le recalcul dans les limites de l'intervalle de temps donné ;
c) réévaluant les ressources de calcul $c_i$ nécessaires pour recalculer le résultat de recherche pré-calculé i en prenant en compte les résultats de recherche pré-calculés en rapport avec le résultat de recherche pré-calculé i qui ont été sélectionnés pour le recalcul ;
d) poursuivant avec l'étape b) si moins de 100 % des ressources de calcul globales de la plateforme de calcul disponibles pour le recalcul dans les limites de l'intervalle de temps donné sont épuisées.

**Fig. 1**

EP 2 911 070 B1

**Effect of decreasing probability of validity of pre-collected search results**

Probability of valid pre-collected search results

Time since computation (hours)

10

11

Fig. 2

EP 2 911 070 B1

# Global accuracy trend

**Fig. 3a**

# User accuracy trend

**Fig. 3b**

EP 2 911 070 B1

## Accuracy distribution (cumulative)

Fig. 3c

EP 2 911 070 B1

# User accuracy trend

Fig. 4a

EP 2 911 070 B1

Global accuracy trend

Oldest pre-computed search results

Gain-cost-ratio-oriented strategy without popularity

Re-computation frequency oriented strategy without popularity

Global accuracy

Numer of re-computation cycle (1 cycle = 20min)

Fig. 4b

35

Computation resources in dependency of number of pre-computed flight records

Fig. 5

Fig. 6

EP 2 911 070 B1

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0133472 A
- WO 0225557 A
- WO 9922315 A
- US 20090204753 A1
- EP 2013002390 W

**Non-patent literature cited in the description**

- **J. CHO.** *Synchronizing a database to Improve Freshness*